# EUROPEAN PATENT SPECIFICATION

(11) **EP 4 551 479 B1**
(45) Date of publication and mention of the grant of the patent: **02.12.2026**
(21) Application number: 23738536.4
(22) Date of filing: 04.07.2023
(51) Int. Cl.: B65G 1/04

(54) **APPARATUS FOR RETRIEVING STORAGE CONTAINERS FROM A STORAGE AND RETRIEVAL SYSTEM**
VORRICHTUNG ZUM ENTNEHMEN VON LAGERBEHÄLTERN AUS EINEM LAGER- UND ENTNAHMESYSTEM
APPAREIL DE RÉCUPÉRATION DE RÉCIPIENTS DE STOCKAGE À PARTIR D'UN SYSTÈME DE STOCKAGE ET DE RÉCUPÉRATION

(30) Priority: 04.07.2022 GB 202209814; 22.03.2023 GB 202304202
(43) Date of publication of application: 14.05.2025
(73) Proprietor: Ocado Innovation Limited, Hatfield, Hertfordshire AL10 9UL (GB)
(72) Inventor: HAYBITTLE, James, Hatfield Hertfordshire AL10 9UL (GB); HARMAN, Matthew, Park, Hatfield Hertfordshire AL10 9UL (GB)
(74) Representative: Ocado Group IP Department
(86) International application number: PCT/EP2023/068460
(87) International publication number: WO 2024/008754

(56) References cited:
- WO-A1-2017/220627
- WO-A1-2019/206440
- WO-A1-2021/175940

## Description

### Field of Invention

The present invention relates to an apparatus for retrieving storage containers from a storage and retrieval system. In particular, but not exclusively, the invention relates to a robotic load handling device (also known as load handling device) for handling storage containers in the storage and retrieval system comprising a grid framework structure.

### Background

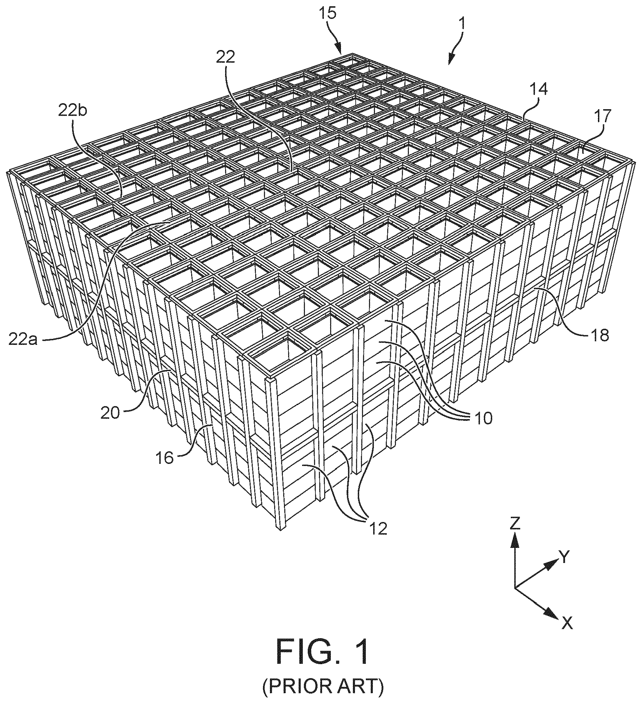

Storage and retrieval systems 1 comprising a three-dimensional storage grid framework structure, within which storage containers/bins are stacked on top of each other, are well known. PCT Publication No. WO2015/185628A (Ocado) describes a known storage and fulfilment or distribution system in which stacks of bins or containers are arranged within a grid framework structure. The bins or containers are accessed by load handling devices remotely operative on tracks located on the top of the grid framework structure. A system of this type is illustrated schematically in Figures 1 to 3 of the accompanying drawings.

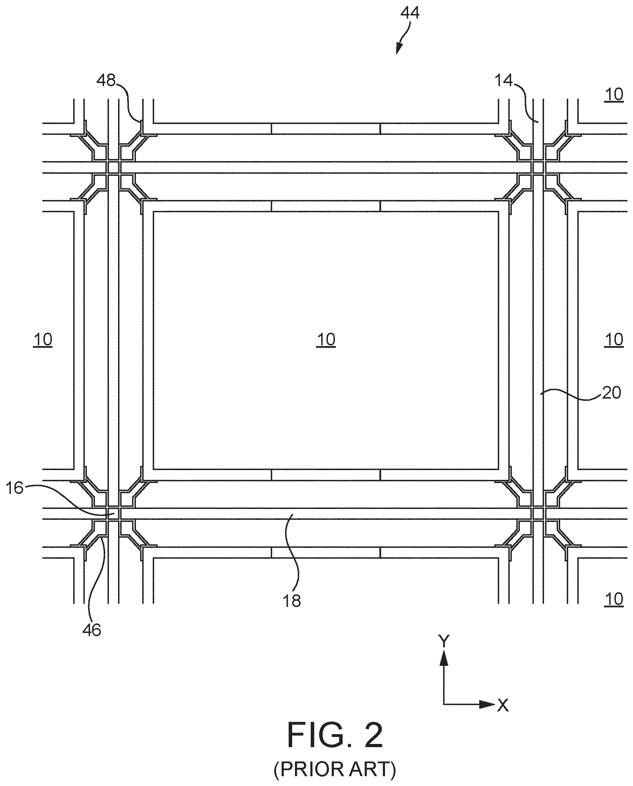

As shown in Figures 1 and 2, stackable containers, known as storage bins or containers 10, are stacked on top of one another to form stacks 12. The stacks 12 are arranged in a three dimensional grid framework structure 14 in a warehousing or manufacturing environment. The grid framework structure is made up of a plurality of storage columns or grid columns. Each grid in the grid framework structure has at least one grid column for storage of a stack of containers. Figure 1 is a schematic perspective view of the grid framework structure 14, and Figure 2 is a top-down view showing a stack 12 of bins 10 arranged within the framework structure 14. Each bin 10 typically holds a plurality of product items (not shown), and the product items within a bin 10 may be identical, or may be of different product types depending on the application. Bins 10 may also be referred to as storage bins or containers or storage containers or totes.

In detail, the three dimensional grid framework structure 14 comprises a plurality of vertical uprights or upright members or upright columns 16 that support horizontal grid members 18, 20. A first set of parallel horizontal grid members 18 is arranged perpendicularly to a second set of parallel horizontal grid members 20 to form a grid structure or grid 15 comprising a plurality of grid cells 17. The grid cell has an opening to allow a load handling device to lift a container or storage bin through the grid cell. In the grid structure, the first set of parallel horizontal grid members 18 intersect the second set of parallel horizontal grid members at nodes. The grid structure is supported by the upright members 16 at each of the nodes or at the point where the grid members intersect such that the upright members are interconnected at their tops ends by the intersecting grid members. The grid members 16, 18, 20 are typically manufactured from metal and typically welded or bolted together or a combination of both. The storage bins or containers 10 are stacked between the upright members 16 of the grid framework structure 14, so that the upright members 16 guard against horizontal movement of the stacks 12 of bins 10, and guide vertical movement of the storage bins 10.

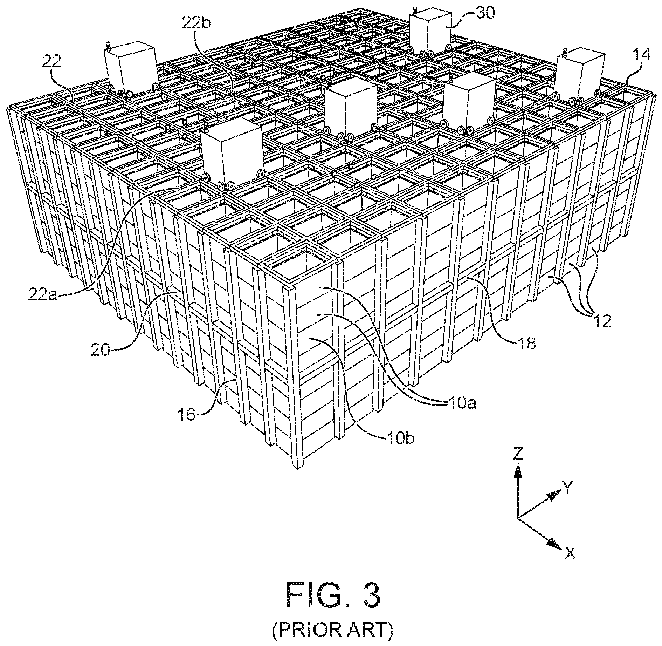

The top level of the grid framework structure 14 includes rails 22 arranged in a grid pattern across the top of the stacks 12. Referring additionally to Figure 3, the rails 22 support a plurality of load handling devices 30. A first set 22a of parallel rails 22 guide movement of the robotic load handling devices 30 in a first direction (for example, an X-direction) across the top of the grid framework structure 14, and a second set 22b of parallel rails 22, arranged perpendicular to the first set 22a, guide movement of the load handling devices 30 in a second direction (for example, a Y-direction), perpendicular to the first direction. In this way, the rails 22 allow movement of the robotic load handling devices 30 laterally in two dimensions in the horizontal X-Y plane, so that a load handling device 30 can be moved into position above any of the stacks 12.

A known load handling device or robotic load handling device otherwise known as a bot 30 shown in Figure 4 and 5 comprising a vehicle body 32 is described in PCT Patent Publication No. WO2015/019055 (Ocado), hereby incorporated by reference, where each load handling device 30 only covers a single grid space or grid cell of the grid framework structure 14. Here, the load handling device 30 comprises a wheel assembly comprising a first set of wheels 34 consisting of a pair of wheels on the front of the vehicle body 32 and a pair of wheels 34 on the back of the vehicle 32 for engaging with the first set of rails or tracks to guide movement of the device in a first direction, and a second set of wheels 36 consisting of a pair of wheels 36 on each side of the vehicle 32 for engaging with the second set of rails or tracks to guide movement of the device in a second direction. Each of the sets of wheels are driven to enable movement of the vehicle in X and Y directions respectively along the rails. One or both sets of wheels can be moved vertically to lift each set of wheels clear of the respective rails, thereby allowing the vehicle to move in the desired direction, e.g. X or Y direction on the grid structure.

WO2017/153583 (Ocado Innovation Limited) teaches a load handling device comprising a wheel positioning mechanism or directional change mechanism for enabling lateral movement of the device in one of two transverse directions by enabling either a first or second set of wheels to selectively engage the first or second set of rails or tracks (22a or 22b). The wheel positioning mechanism comprises a complicated arrangement of linkages driven by a linear actuator or motor to selectively lower or raise the first set of wheels or the second set of wheels into engagement or disengagement with the first set of tracks or rails or the second set of tracks or rails.

The load handling device 30 is equipped with a lifting mechanism or container lifting mechanism or crane mechanism to lift a storage container from above. The crane mechanism comprises a winch tether or cable 38 wound on a spool or reel (not shown) and a grabber device or container-gripper assembly 39 in the form of a lifting frame. The term "grabber device" and "container-gripping assembly" are used interchangeably in the patent specification to mean the same feature. The lifting device comprise a set of lifting tethers 38 extending in a vertical direction and connected nearby or at the four corners of the lifting frame 39, otherwise known as the grabber device (one tether near each of the four corners of the grabber device) for releasable connection to a storage container 10. The grabber device 39 is configured to releasably grip the top of a storage container 10 to lift it from a stack of containers in a storage system of the type shown in Figure 1 and 2.

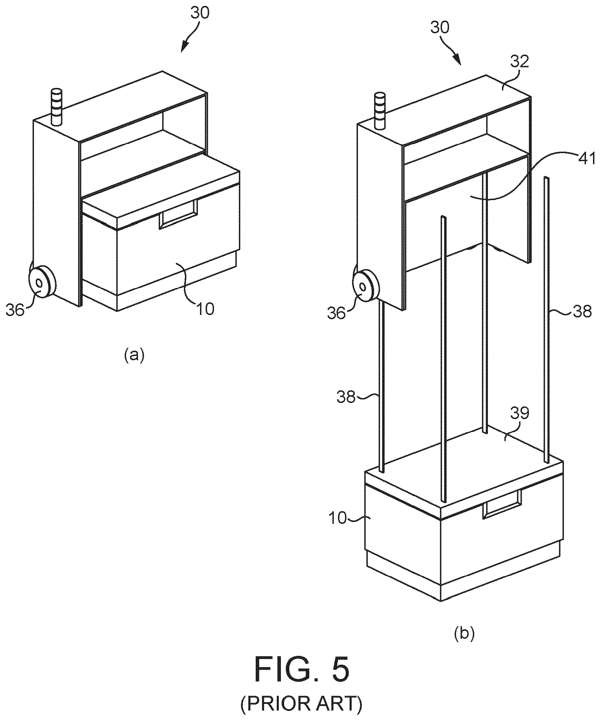

The wheels 34, 36 are arranged around the periphery of a cavity or recess, known as a container-receiving recess 41, in the lower part. The recess is sized to accommodate the container 10 when it is lifted by the crane mechanism, as shown in Figure 5 (a and b). When in the recess, the container is lifted clear of the rails beneath, so that the vehicle can move laterally to a different location. On reaching the target location, for example another stack, an access point in the storage system or a conveyor belt, the bin or container can be lowered from the container receiving portion and released from the grabber device. The container receiving space may comprise a cavity or recess arranged within the vehicle body, e.g. as described in WO 2015/019055 (Ocado Innovation Limited). Alternatively, the vehicle body of the load handling device may comprise a cantilever as taught in WO2019/238702 (Autostore Technology AS), in which case the container receiving space is located below a cantilever of the load handing device. In this case, the grabber device is hoisted by a cantilever such that the grabber device is able to engage and lift a container from a stack into a container receiving space below the cantilever.

Power to the drive units for operating the lifting mechanism and the wheel positioning mechanism is provided by a rechargeable power source. The load handling device further comprises one or more auxiliary electrical components, e.g. a controller, one or more wire looms to carry information from the controller and/or power from the rechargeable power source to the drive units of the load handling device. For example, one or more load handling devices remotely operable on the grid structure are configured to receive instructions from a master controller to a retrieve a storage container from a particular storage location within the grid framework structure. Wireless communications and networks may be used to provide the communication infrastructure from the master controller via one or more base stations to the one or more load handling devices operative on the grid structure. A controller in the load handling device in response to receiving the instructions is configured to control various driving mechanisms to control the movement of the load handling device. For example, the load handling device may be instructed to retrieve a container from a storage column at a particular location on the grid structure. The instruction can include various movements in an X-Y direction on the grid structure. Once at the storage column, the lifting mechanism is then operated to grab the storage container and lift it into a container receiving space in the body of the load handling device where it is subsequently transported to a another location on the grid structure commonly known as a drop off port. The container is lowered to a suitable pick station allow retrieval of the item from the storage container. Movement of the load handling devices on the grid structure also involves the load handling devices being instructed to move to a charging station which is usually located at the periphery of the grid structure. The load handling device remains stationary at the charging station while the battery is recharged. The charging period is a significant source of downtime for the load handling device and can be on the order of hours. The rechargeable power source and the auxiliary electrical components of the load handling device are typically housed within the body of the load handling device.

Considering that a number of components, which includes various motors, pulleys, rechargeable power source and auxiliary electrical components such as a control board needed for the load handling device to operate on the grid framework structure, the assembly of the individual components is one of biggest costs in the manufacture of the load handling device. As hundreds of load handling devices are needed to operate on the grid framework structure, there is an increasing drive to optimise the mass manufacture of the load handling devices in order to achieve maximum economies of scale along a given production line. One of the factors in maximising the economies of scale in the mass manufacture of load handling devices is the number of operations required to assemble a load handling device, wherein the efficiency gains can be obtained by assembling the load handling device with the least number of operations. This would involve either using fewer components and/or having components that can be easily assembled together. By allowing the components of the load handling device to be easily assembled together lends itself kindly to automation since less complex tasks are required to assemble the different components of the load handling device together.

WO2017220627 discloses a load handling device according to the preamble of claim 1.

A load handling device is thus required that is easy to assemble, is lightweight and lower cost to manufacture.

### Summary of the Invention

The present invention has mitigated the above problem by providing a robotic load handling device according to claim 1. The robotic load handling device (also known as a load handling device) with a frame structure comprises a plurality of modular sub-frames arranged in a vertical stack, each of the plurality of modular sub-frames are connectable to another in the vertical stack and provides respective functional characteristics of the load handling device. These include but are not limited to the wheel assembly, wheel positioning mechanism, container lifting mechanism, and electrical components. The individual modular sub-frames are connectable allowing the modular sub-frames providing the different functions of the load handling device to be vertically stacked. To reduce the number of operations in the assembly or manufacture of the load handling device, it is desirable to reduce the number of modular sub-frames when assembling the modular sub-frames together. This has the advantage of increasing the stability of the load handling device as the components of the load handling device, some of which are located higher up in the upper portion of the load handling device, can be supported further down the frame, thereby, lowering the centre of gravity of the load handling device. This is particularly important for a load handling device having a footprint that occupies only a single grid cell where the lower portion of the robotic load handling device comprises the container receiving space as taught in WO 2015/019055 (Ocado Innovation Limited). It also provides a more compact load handling device that makes best use of space within the frame structure. However, reducing the number of modular sub-frames introduces new problems in the manufacture of the load handling device. These include but are not limited to the structural integrity of the frame and the ability of the frame to accommodate all of the functional characteristics of the load handling device. Reducing the number of modular sub-frames also limits the number of mounting points for supporting the electrical components such as the wiring loom from the controller and/or the rechargeable power source. The present applicant has mitigated this problem by providing a receptacle supported by the frame that doubles up as a battery chute for accommodating a power source and a mount or mounting column for one or more of the components of the robotic load handling device. The present invention, thus, provides a robotic load handling device for lifting and moving one or more containers stackable in a storage and retrieval system, the storage and retrieval system comprising a grid structure comprising a plurality of grid members comprising a first set of grid members extending in a first direction and a second set of grid members extending in a second direction, the second direction being substantially perpendicular to the first direction such that the plurality of grid members are arranged in a grid pattern for guiding the movement of the load handling device on the grid structure, the load handling device comprising a frame supporting:
a) a container lifting mechanism comprising a container-gripping assembly configured to releasably grip a container, and a drive mechanism configured to raise and lower the container-gripping assembly;
b) a wheel assembly comprising a first set of wheels for engaging with the first set of grid members to guide movement of the load handling device in a first direction and a second set of wheels for engaging with the second set of grid members to guide the movement of the load handling device in a second direction, wherein the second direction is substantially perpendicular to the first direction;
c) a wheel positioning mechanism configured for selectively lowering or raising the first set of wheels or the second set of wheels into engagement or disengagement with the first set of grid members or the second set of grid members;
d) a receptacle for accommodating a power source, the receptacle having an externally accessible open top end for receiving the power source in a substantially vertical direction and comprising charging receiving elements for electrically coupling with charge providing elements of the power source to provide power to the wheel positioning mechanism and the container lifting mechanism,
wherein the frame comprises a plurality of modular sub-frames arranged in a vertical stack, and wherein the receptacle extends vertically through at least one of the plurality of modular sub-frames.

Components that are fundamental to the movement of the robotic load handling device such as the wheel assembly, wheel positioning mechanism and the container lifting mechanism are very much restricted to a particular area of the robotic load handling device. For example, it is essential that the wheel assembly are mounted to the lower portion of the frame for the robotic load handling device to move on the grid structure and the container lifting mechanism is positioned in the upper portion of the robotic load handling device so that the container-gripping assembly or grabber device can be lowered and raised through the container receiving space. However, there are components of the robotic load handling device, whilst being fundamental to the operation of the robotic load handling device are not essential to a particular location in the robotic load handling device for its operation. These include but are limited to the electrical components such as the controller for controlling the container lifting mechanism and the power source. Optionally, the frame further supports an electrical component comprising a controller for controlling the container lifting mechanism and the wheel positioning mechanism. The term "support" covers being supported directly by and/or indirectly by the frame, i.e. via another component.

In the present invention, an area is provided in the robotic load handling device for mounting the components where the functional characteristics of the components are not solely dictated by its location in the robotic load handling device. As the location of the power source in the load handling device is not fundamental to the operation of the load handling device on the grid structure, the present invention provides a receptacle for accommodating and retaining a power source within a separate area of the frame. The receptacle having an externally accessible open top end for receiving a power source and charge receiving elements for electrically coupling with charge providing elements of the power source when the power source is lowered into the receptacle via the open top end. Whilst the operation of the load handling device is not dictated by the location of the power source, the stability of the load handling device is dependent on the location of the power source since it represents a significant proportion of the weight of the load handling device. To increase the stability of the robotic load handling device on the grid structure, particularly, in the case where the footprint of the robotic load handling device occupies a space within a single grid cell, it is essential that the centre of mass of the robotic load handling device is as low as possible within the body of the robotic load handling device. To improve the stability of the robotic load handling device whilst providing a mounting area for the electrical components of the robotic load handling device, the receptacle is partially buried deep within the frame of the robotic load handling device such that the receptacle extends vertically through at least one of the plurality of modular sub-frames. For the purpose of definition, the term "extends vertically through" also encompasses extending vertically through a horizontal plane to which the at least one of the plurality of modular sub-frames lies in.

As the receptacle is partially buried with the frame of the load handling device, the receptacle may also form a core or a battery chute of the load handling device. As a result, the receptacle may afford to the construction of the load handling device as the outer face of the receptacle can help to position one or more of the modular sub-frames relative to the receptacle, i.e. the receptacle may help to ensure that one or more of the modular sub-frames are properly assembled in the construction of the load handling device.

Preferably, each modular sub-frame of the plurality of modular sub-frames comprises at least four connecting blocks, each of the at least four connecting blocks is connected to two other connecting blocks in a single modular sub-frame by one or more horizontal connecting elements to form a rectangular frame structure and wherein the at least four connecting blocks of vertically adjacent modular sections are connectable in the vertical stack by one or more substantially vertical connecting elements to form the frame comprising a plurality of rectangular frames.

Preferably, the frame is an open frame structure. The open frame structure is a three dimensional open frame structure that defines a volume for housing at least a portion of the lifting mechanism, and/or the wheel assembly, and/or the wheel positioning mechanism. For the purpose of the present invention, the term "open frame structure" is defined as a structure where the internal operational components of the load handling device, e.g. any one of the spools for carrying the lifting tethers of the container lifting mechanism, and/or the power source and/or the control unit, are visible externally of the load handling device, i.e. no external cladding such that the internal components providing the functional characteristics of the load handling device of the load handling device are visible externally. Vertically adjacent rectangular frames of the open frame structure define a volumetric region of the load handling device, e.g. the open frame structure is a three dimensional open frame structure.

Thus, the open frame structure comprises a plurality of modular sub-frames, wherein the plurality of modular sub-frames supports the lifting mechanism, the wheel assembly, the wheel positioning mechanism and the electrical components. Each modular sub-frame of the plurality of modular sub-frames comprises at least four connecting blocks, each of the at least four connecting blocks is connected to two other connecting blocks in a single modular sub-frame by one or more horizontal connecting elements to form a rectangular frame structure. The connection between the connecting blocks to two other corner connecting blocks in a single modular sub-frame can be directly to two adjacent connecting blocks or indirectly via another connecting block. Not only do each of the at least four connecting blocks is connected to two other connecting blocks in a single modular sub-frame by one or more horizontal connecting elements to form a rectangular frame structure, the at least four connecting blocks allow the different modular sub-frames to be easily connectable in a vertical stack. A plurality of the rectangular frames are thus connectable to one another in a vertical stack by one or more vertical connecting elements to form the open frame structure.

The different functions of the load handling device such as the container lifting mechanism, the wheel assembly, the wheel positioning mechanism, and/or the electrical components are supported by the frame. The term "support" is construed to cover being supported directly by the frame and/or indirectly by the frame via another component. For example, one or more of the electrical components can be supported by the frame via being mounted to the receptacle.

For ease of assembly of the frame, optionally, the one or more horizontal and/or vertical connecting elements comprises a connecting rod or tube. The connecting rods can easily be grasped and assembled into the blocks in different rotational orientations. Thus, assembly of the load handling device is easier with connecting blocks and connecting rods. To aid with reducing the weight of the load handling device, optionally the connecting rod comprises carbon fibre in a polymer matrix. Preferably, one or more of the at least four connecting blocks of one or more of the plurality modular sections are connected to the one or more horizontal and/or vertical connecting elements by a joint. Connection between the horizontal connecting elements and the connecting blocks by the joint optionally comprises a glue channel. To increase the functionality of one or more of the four connecting blocks, the glue channel is integrated into the one or more of the at least four connecting blocks. Preferably, the one or more of the at least four connecting blocks comprises one or more injection points in fluid communication with the glue channel for injecting adhesive into the continuous glue channel. Optionally, one or more of the connecting blocks comprises a socket for receiving an end of the connecting rod or tube. Preferably, the socket is integrally formed within the connecting blocks. To secure the connecting rods or tubes to the connecting blocks, preferably, the socket has a substantially cylindrical internal wall, the cylindrical internal wall being configured to form a glue channel when the receiving end of the connecting rod is inserted into the socket. Preferably, the one or more of the at least four connecting blocks comprises one or more injection points in fluid communication with the socket for injecting adhesive into the glue channel. This assists with the simplicity of connecting the one or more blocks of one or more of the plurality of modular sections with the horizontal and/or vertical connecting elements.

To increase the structural integrity of the frame, optionally, at least one of the plurality of modular sub-frames are braced by one or more bracing members. Preferably, the one or more bracing elements comprise crossed bracing elements. In addition to the horizontal and the vertical connecting elements providing structural support to the frame, one or more bracing elements can extend across the at least one modular sub-frames. The one or more bracing elements can also provide additional support to anchor one or more components of the lifting mechanism, and/or the wheel assembly, and/or the wheel positioning mechanism, and/or the electrical components. Optionally, the receptacle is supported by the cross brace of the at least one of the plurality of modular sub-frames. The cross-brace can provide a mount for the receptacle. The cross brace can represent a division between the upper portion of the robotic handling device comprising the receptacle and the lower portion of the robotic load handling device comprising the wheel assembly and the container receiving space.

To alleviate the problem of charging downtime, the load handling device may be powered by an exchangeable power source. When the power source in the load handling device is depleted, the depleted power source is exchanged for a fully charged power source and therefore the charging downtime is reduced to the time it takes to exchange the power source, rather than being the time to charge the power source. By providing a receptacle that allows the power source to be inserted and removed in a vertical direction, the load handling device is provided with at least the following advantages, particularly over the robotic load handling devices in the art, particularly those in which the power source is exchanged in a horizontal direction:
- The receptacle is externally accessible and therefore the power source can be conveniently and efficiently exchanged without having to open the body load handling device. This also allows the power source to be exchanged while the load handling device remains on the track structure.
- The robotic load handling device is not required to present a particular side-face to exchange the power source, which provides flexibility as to how the load handing device is orientated on the track structure, and the location of peripheral equipment for exchanging the power source.
- The robotic load handling device is not required to move in a horizontal direction to exchange the power source, which frees up space on the track structure and does not require the load handling device to have an auxiliary power source to power a driving assembly after the power source has been removed.
- The robotic load handling device is not required to provide a horizontal reaction force (e.g. using a braking mechanism) to prevent the load handling device from moving when the power source is being inserted or removed because the reaction force is in the vertical direction and is provided by the track structure underneath the load handling device.

The power source may be a battery. The battery may be a rechargeable battery.

The receptacle may be externally accessible from above the load handling device. The receptacle may comprise a top-facing opening and the receptacle may be configured to removably receive the power source in a downwards direction via the top-facing opening. In this way, insertion of the power source into the receptacle and the charge receiving elements between the power source and the receptacle is naturally aided by the weight of the power source and gravity. The receptacle may be configured to couple to the power source when the power source is vertically received into the receptacle and uncouple from the power source when the power source is vertically removed from the receptacle. The receptacle may comprise charge receiving elements that is configured to electrically couple to corresponding charge providing elements of the power source when the power source is vertically received into the receptacle and uncouple from the charge providing elements of the power source when the power source is vertically removed out of the receptacle. The charge receiving elements of the receptacle may comprise a male connector and the charge providing elements of the power source may comprise a female connector or vice versa. The charge providing and charge receiving elements may alternatively comprise electrical contact pad.

To aid removal of the power source from the receptacle, optionally, the receptacle extends vertically above the height of the frame, i.e. the receptacle protrudes above the frame. Having the receptacle extending vertically above the frame, allows greater exposure of the power source in comparison to the rest of the robotic load handling device. Moreover, it also permits the frame to be easily dismantled since it allows at least one of the modular sub-frames surrounding the receptacles to be easily removed from the load handling device to be serviced or replaced without the need to dismantle the other modular sub-frames. For example, the modular sub-frame surrounding the receptacle can easily be lifted around the receptacle. Optionally, the receptacle is removably attached to at least one of the plurality of modular sub-frames. The ability of having the receptacle to be removably attached to at least one of the plurality of modular frames provides greater access to the interior of the load handling device for servicing of or replacing one or more of components of the load handling device when the receptacle is removed from the frame. This is particularly in an area of the one or more modular sub-frames occupied by the receptacle.

As the power source represents a signification proportion of the weight of the robotic load handling device and since the receptacle is in the upper portion of the robotic load handling device, it is important that the receptacle is firmly attached to the frame of the robotic load handling device. This is because acceleration of the robotic load handling device on the grid structure which can be as high as 2 m/s² may cause the power source to recoil in the receptacle and thereby, imparting undesirable recoil forces against the receptacle. Considering that the weight of the power source which can be as high as 10kg, the recoil of the power source in the receptacle can result in fatigue in the attachment between the receptacle and the frame, more specifically to one or more of the supporting modular sub-frames. In an extreme case, this may cause the attachment between the receptacle and the frame to loosen. To provide more support to the receptacle from becoming detached in the frame, optionally, the receptacle is integrated to at least one of the plurality of modular sub-frames. Optionally, the receptacle is connected to at least one of the plurality of modular sub-frames by at least one strut.

Preferably, the receptacle provides one or more mounting points for mounting one or more electrical components. The electrical components include but is not limited to the control unit for controlling the wheel assembly, the container lifting mechanism and the wheel positioning mechanism and/or a communication module comprising a transmitter and receiver for respectively transmitting and receiving data from a base station via one or more antennas mounted to the receptacle. For example, the receiver can be configured to receive wireless signals via an antenna comprising data associated with instructions from an external control unit related to the positioning or trajectory of the robotic load handing device on the grid structure. The controller in the load handling device in response to receiving the instructions is configured to control various driving mechanisms to control the movement of the load handling device. For example, the load handling device may be instructed to retrieve a container from a storage column at a particular location on the grid structure. The instruction can include various movements in an X-Y direction on the grid structure. Once at the storage column, the lifting mechanism is then operated to grab the storage container and lift it into a container receiving space in the body of the load handling device where it is subsequently transported to a another location on the grid structure commonly known as a drop off port. The storage container is lowered to a suitable pick station so as to allow retrieval of the item from the storage container. Movement of the load handling devices on the grid structure also involves the load handling devices being instructed to move to a charging station which is usually located at the periphery of the grid structure. The position of the robotic load handling device on the grid structure that is used to generate the trajectory of the robotic load handling device on the grid structure is provided by signals generated from one or more sensors on the robotic load handling device being wirelessly communicated to the external control unit via the transmitter mounted to the receptacle. Other electrical components that can be mounted to the receptacle include the J-switch which is a receiver independent to the receiver for receiving instructions associated with the trajectory of the robotic loads handling device on the grid structure, that provide safety instructions to the robotic load handling device to halt movement of the robotic load handling device on the grid structure when externally actuated. This is to prevent the robotic load handling device operative on the grid structure causing injury to personal on the grid structure.

To safely route cabling from the electrical components to the relevant operational components of the robotic load handling device such as the container lifting mechanism, the lifting drive mechanism for operating the wheel assembly, the wheel positioning mechanism and prevent any of the electrical cabling from snagging any of the operational components, the robotic load handling device further comprises a cable tray mounted to the receptacle for routing one or more electrical cables from the electrical component (e.g. controller) mounted to the receptacle to the container lifting mechanism and the wheel positioning mechanism. The cable tray offers a guide surface for routing the electrical cables to their respective components and provides a guard minimising the electrical cabling from snagging any of the components. To prevent movement of the electrical cabling on the cable tray, the cable tray further components one or more cable retaining clips for retaining the one or more cables to the cable tray. Optionally, the one or more cable retraining clips comprises a plurality of anchoring elements configured for engaging with the cable tray.

To accommodate the receptacle within the frame such that the receptacle extends vertically through at least one of the plurality of modular sub-frames whilst not affecting the functional characteristics providing by the at least one of the plurality of modular sub-frames, optionally, the container lifting mechanism comprises:
i) a first set of spools and a second set of spools, each of the first and second set of spools carrying a lifting tether having a first end anchored to the container-gripping assembly and a second end anchored to its respective spool,
ii) a first lifting shaft and a second lifting shaft, the first set of spools being mounted for rotation on the first lifting shaft and the second set of spools being mounted for rotation on the second lifting shaft, the first and second lifting shafts being connected to the lifting drive mechanism to transfer rotation from an output of the lifting drive mechanism to raise and lower the container-gripping assembly;
wherein the first and second lifting shafts are spaced apart such that the receptacle is disposed between the first and second lifting shafts.

Having the plurality of spools carrying the lifting tethers mounted for rotation on separate first and second lifting shafts allows the receptacle to extend between the first and second lifting shafts of the container lifting mechanism such that the receptacle can be partially "buried" within the frame. As a result, the stability of the robotic load handling device is improved as the power source can be placed further down the frame. Having the receptacle being partially "buried" within the frame by being located between the first and second lifting shafts allows easy access to the plurality of spools simply be removing the receptacle from the frame; in particular when there is a need to untangle the lifting tethers on the spools.

To enable the receptacle to be partially "buried" within the frame, preferably, the first and second lifting shafts are mounted for rotation to the at least one of the plurality of modular sub frames surrounding the receptacle. For example, the first and second lifting shafts can be mounted for rotation to the connecting blocks of the modular sub-frame. In other words, mounting of the first and second sets of spools to the first and second shafts creates space for accommodating at least a portion of the receptacle. Optionally, the lifting drive mechanism comprises a drive pulley and a plurality of timing pulleys connected for rotation with the first and second set of spools by an endless belt. Preferably, the drive pulley is driven by a single motor. The single motor, the plurality of timing pulleys and the timing belt are configured to transfer rotation from an output of the single motor to raise and lower the container-gripping assembly.

To simply the construction of the receptacle and to minimise the weight of the frame, the receptacle comprises a plurality of connecting blocks connected by a plurality of connecting elements to define an open frame structure. Optionally, the receptacle comprises at least eight connecting blocks, each of the eight connecting blocks is connected to two other connecting blocks in a horizontal plane by one or more horizontal connecting elements and one other connecting block in a vertical plane by one or more vertical connecting elements to form a cuboidal frame structure. Alternatively, the receptacle can be fabricated from metal, preferably formed from folded sheet metal comprising a bottom wall (base), upwardly standing sidewalls and end walls. Optionally, the receptacle comprises a metal box having an open top end for receiving the power source in a substantially vertical direction. Preferably, the metal comprises aluminium. The advantage of using metal in the fabrication of the receptacle is to block or mitigate any electromagnetic signals emanating from the battery and/or the battery management electronics interfering with the signals from controller of the load handling device, i.e. functions as a Faraday cage and shield. In comparison to fabricating the receptacle from a plurality of connecting blocks connected by a plurality of connecting elements, fabricating the receptacle from sheet metal offers a continuous guide surface for receiving the power source, e.g. battery, when lowered into the receptacle. This helps to correctly position the power source into the receptacle and to guide the power source correctly onto the electrical connectors. Preferably, the receptacle comprises a base for supporting the power source and upwardly standing sidewalls and end walls extending from the base.

In order for the footprint of the load handling device to occupy a footprint of substantially only a single grid space or cell, preferably, the frame defines a volume for housing a container receiving space. The container receiving space is a space for housing a container in the frame of the load handling device such that the load handling device is able to move on the tracks or grid structure. The three dimensional frame defines a volume having an upper portion and a lower portion, the upper portion housing the receptacle of the load handling device and the lower portion housing the container receiving space.

One of the advantages of a load handling device being built from a plurality of connecting blocks connected together to form multiple rectangular frames and vertically stacked to form a frame is that the connecting blocks not only provide a structural component to the load handling device but also a functional component. In other words, each of the at least four connecting blocks of each of the plurality of modular sub frames is a separate connecting block that provides both a structural and functional component of the load handling device. This removes the need to have a separate structural component that provides the structural characteristics of the load handling device and separate functional components mounted to the structural component for the operation of the load handling device on the grid structure, since one or more of the connecting blocks can combine both the structural and functional aspects of the load handling device. Having one or more of the connecting blocks of the frame to include both structural and functional components of the load handling device also reduces the weight of the load handling device since the number of parts in constructing the load handling device of the present invention is reduced.

Preferably, one or more of the plurality of modular sub-frames comprises at least a portion of the container lifting mechanism, and/or the wheel assembly, and/or the wheel positioning mechanism. For example, one or more of the at least four connecting blocks of the one or more of the plurality of modular sub frames comprises one or more mounts for a pulley. Optionally, one or more of the at least four connecting blocks of the one or more of the plurality of modular sub frames comprises one or more mounts for a motor.

Optionally, at least a portion of the container lifting mechanism, and/or the wheel assembly, and/or the wheel positioning mechanism is integrated into one or more of the plurality of modular-sub-frames. For example, the mounts for mounting each of the wheels of the wheel assembly can be integrally formed with one or more of the at least four connecting blocks.

Optionally, any one of the lifting mechanism, and/or the wheel assembly, and/or the wheel positioning mechanism, and/or the electrical components can be shared amongst two or more of the plurality of modular sections. For example, the wheel positioning mechanism comprises a cam mechanism comprising a cam having a cam profile having a highland part and a valley part, a cam follower, and a traveller for moving the cam follower along the cam profile so as to convert movement of the cam along the cam profile to a vertical movement. The cooperation between the cam, the cam follower, and the traveller can be shared amongst two or more of the plurality of modular sections.

The present invention provides a method according to claim 13 of construction of a robotic load handling device comprising a frame supporting:
a) a container lifting mechanism comprising a container-gripping assembly configured to releasably grip a container, and a lifting drive mechanism configured to raise and lower the container-gripping assembly;
b) a wheel assembly comprising a first set of wheels for engaging with the first set of grid members to guide movement of the load handling device in a first direction and a second set of wheels for engaging with the second set of grid members to guide the movement of the load handling device in a second direction, wherein the second direction is substantially perpendicular to the first direction;
c) a wheel positioning mechanism configured for selectively lowering or raising the first set of wheels or the second set of wheels into engagement or disengagement with the first set of grid members or the second set of grid members;
d) charging receiving elements for electrically coupling with charge providing elements of a rechargeable power source to provide power to the wheel positioning mechanism and the container lifting mechanism,
wherein the method comprising the steps of:
i) forming a plurality of modular sub-frames, each of the plurality of modular frames being formed by linking together at least four connecting blocks by one or more horizontal connecting elements;
ii) linking the plurality of the modular sub-frames together in a vertical stack by connecting the connecting blocks of vertically adjacent modular sub-frames by one or more vertical connecting elements to form the frame,
iii) mounting a receptacle for accommodating a power source to the frame such that the receptacle extends vertically through at least one of the plurality of modular sub-frames, said receptacle comprising charge receiving elements for electrically coupling with charge providing elements of the power source and an externally accessible open top end for receiving the power source in a substantially vertical direction.

Mounting the receptacle to the frame includes mounting the receptacle to at least one of the plurality of modular sub-frames. Optionally, the method further comprises the step of attaching the receptacle to at least one of the plurality of modular sub-frames. To further secure the receptacle to the frame, the method further comprises the step of bracing the receptacle to the frame by one or more bracing members or struts.

Preferably, each of the modular sub-frames is formed by inserting one or more of the plurality of horizontal connecting elements into an opening in one or more of the at least four connecting blocks. Preferably, the plurality of modular-sub frames are linked together in the vertical stack by inserting one or more vertical connecting elements into an opening in one or more of the at least four connecting blocks of vertically adjacent modular sub-frames. To improve the manufacturability of the load handling device, preferably, the method further comprising the step of integrally forming at least a portion of the container lifting mechanism, and/or the wheel assembly, and/or the wheel positioning mechanism from one or more of the at least four connecting blocks of one or more of the plurality of modular sub-frames. By integrally forming at least a portion of the functional components of the load handling device from the open frame structure, more specifically from one or more of the connecting blocks of the open frame structure, the number of components needed to construct the load handling device with the desired functional characteristics of the load handling device operable on the grid framework structure reduces. To capture the different complex shapes of the at least portion of the container lifting mechanism, the wheel assembly, and the wheel positioning mechanism, optionally, one or more of the connecting blocks of the at least four connecting blocks of one or more of the plurality of rectangular frames are formed by 3D printing or additive manufacturing.

The present invention further provides a method according to claim 14 of exchanging the power source in the receptacle of the robotic load handling device defined above. The method comprises the steps of:
(i) vertically removing a first power source from the receptacle; and
(ii) vertically inserting a second power source into the receptacle.

The load handling device may remain stationary in at least a horizontal direction (e.g. on the same grid cell of the track structure) from when the first power source is removed to when the second power source is inserted.

To prevent the power source recoiling when the load handling device accelerates on the tracks of the grid structure, the frame is configured so that the power source can be lowered into the frame and therefore, is contained within the frame. To contain the power source within the frame and thereby, provide support to the power source as a result of forces generated when the power source attempts to recoil when the robotic load handling device accelerates on the tracks, the present disclosure further provides a not claimed robotic load handling device for lifting and moving one or more containers stackable in a storage and retrieval system, the storage and retrieval system comprising a grid structure comprising a plurality of grid members comprising a first set of grid members and a second set of grid members, the second set of grid members being substantially perpendicular to the first set of grid members such that the plurality of grid members are arranged in a grid pattern for guiding the movement of the load handling device on the grid structure, the load handling device comprising a frame comprising:
a) a container lifting mechanism comprising a container-gripping assembly configured to releasably grip a container, and a lifting drive mechanism configured to raise and lower the container-gripping assembly;
b) a wheel assembly comprising a first set of wheels for engaging with the first set of grid members to guide movement of the load handling device in a first direction and a second set of wheels for engaging with the second set of grid members to guide the movement of the load handling device in a second direction, wherein the second direction is substantially transverse to the first direction;
c) a wheel positioning mechanism configured for selectively lowering or raising the first set of wheels or the second set of wheels into engagement or disengagement with the first set of grid members or the second set of grid members;
d) a power source compartment having an externally accessible open top end for receiving the power source in a substantially vertical direction and a base for supporting the power source, said power source compartment comprising charging receiving elements for electrically coupling with charge providing elements of the power source to provide power to the wheel positioning mechanism and the container lifting mechanism,
wherein the frame comprises a plurality of modular sub-frames arranged in a vertical stack, and wherein the lifting drive mechanism is mounted to at least one of the plurality of modular sub-frames and wherein the externally accessible open top end of the power source compartment is formed within the at least one of the plurality of modular sub-frames to which the lifting drive mechanism is mounted

By having the externally open top end of the power source compartment formed within the at least one of the plurality of modular sub-frames allows the power source to be lowered into the frame of the robotic load handling device. Thus, instead of the receptacle extending above the height of the frame, by "burying" the receptacle forming the power source compartment within the frame, the receptacle can optionally extend below the height of the frame or at least be flush with the height of the frame. To accommodate the externally accessible open top end of the power source compartment, the externally accessible open top end of the power source compartment is formed within the at least one of the plurality of modular sub-frames to which the lifting drive mechanism is mounted. To form the open top end of the power source compartment within the at least one of the plurality of modular sub-frames to which the lifting drive mechanism is mounted, the container lifting mechanism comprises:
i) a first set of spools and a second set of spools, each of the first and second set of spools carrying a lifting tether having a first end anchored to the container-gripping assembly and a second end anchored to its respective spool,
ii) a first lifting shaft and a second lifting shaft, the first set of spools being mounted for rotation on the first lifting shaft and the second set of spools being mounted for rotation on the second lifting shaft, the first and second lifting shafts being connected to the lifting drive mechanism to transfer rotation from an output of the lifting drive mechanism to raise and lower the container-gripping assembly;
wherein the first and second lifting shafts are spaced apart such that the externally accessible open top end of the power source compartment is disposed between the first and second lifting shafts.

Preferably, each modular sub-frame of the plurality of modular sub-frames comprises at least four connecting blocks, each of the at least four connecting blocks is connected to two other connecting blocks in a single modular sub-frame by one or more horizontal connecting elements to form a rectangular frame and wherein the at least four connecting blocks of vertically adjacent modular sections are connectable in the vertical stack by one or more substantially vertical connecting elements to form the frame comprising a plurality of the rectangular frames. Preferably, the first and second lifting shafts are mounted for rotation to the at least four modular connecting blocks of the at least one of the plurality of modular sub-frames to which the lifting drive mechanism is mounted. Preferably, the externally accessible open top end of the power source compartment is formed from four corner pieces mounted to the at least one of the plurality of modular sub-frames to which the lifting drive mechanism is mounted.

To support the power source when it is lowered into the frame of the robotic load handling device, preferably, the base is mounted to at least one of the plurality of modular sub-frames located below the at least one of the plurality of modular sub-frames to which the lifting drive mechanism is mounted. Thus, the power source compartment is distributed amongst two of the plurality of modular sub-frames; the top modular sub-frame forming the open top end of the power source compartment and the modular sub-frame below the top modular sub-frame supporting the base of the power source compartment. Optionally, the base comprises the charge receiving elements for electrically coupling with the charging providing elements of a power source when it is lowered into the power source compartment. The charge receiving elements electrically couples with the charge providing elements of the power source when the power source is seated on the base. Preferably, the base is mounted to the at least one of the plurality of modular sub-frames via a cross-brace. Optionally, the frame defines a volume having an upper portion and a lower portion, the upper portion comprising the power source compartment and the lower portion comprising a container receiving space.

The present invention further provides an automated storage and retrieval system according to claim 15, the system comprising:
a grid structure comprising a plurality of grid members comprising a first set of grid members and a second set of grid members, the second set of grid members being substantially perpendicular to the first set of grid members such that the plurality of grid members are arranged in a grid pattern for guiding the movement of one or more the load handling devices operating on the grid structure; and
at least one robotic load handling device according to the present invention.

### Description of Drawings

Further features and aspects of the present invention will be apparent from the following detailed description of an illustrative embodiment made with reference to the drawings, in which:
Figure 1 is a schematic diagram of a grid framework structure according to a known system,
Figure 2 is a schematic diagram of a top down view showing a stack of bins arranged within the framework structure of Figure 1.
Figure 3 is a schematic diagram of a known storage system of a load handling device operating on the grid framework structure.
Figure 4 is a schematic perspective view of the load handling device showing the lifting device gripping a container from above.
Figure 5(a) and 5(b) are schematic perspective cut away views of the load handling device of Figure 4 showing (a) a container accommodated within the container receiving space of the load handling device and (b) the container receiving space of the load handling device.
Figure 6 is a perspective view of a grabber device for engaging with a storage container according to the present invention.
Figure 7a is a schematic drawing of the load handling device according to an embodiment of the present invention.
Figure 7b is a schematic drawing of the load handling device showing the lowering of a power source into the receptacle according to the embodiment of the present invention.
Figure 8 (a and b) are schematic drawings of (a) the different modular sections of the load handling device shown in Figure 7; and (b) an analogy of the different modular sections as separate rectangular frames formed by four connecting blocks.
Figure 9 (a and b) are schematic drawings of (a) an assembly of the modular sections shown in Figure 8(a) to form an open frame structure of the load handling device; and (b) a simplified version of an assembly of the rectangular frames of the modular sections shown in Figure 8(b) to form the open frame structure of the load handling device.
Figure 10 is a schematic drawing showing the assembly of the connecting blocks to form a rectangular frame, the rectangular frame being braced to represent the middle halo of the open frame structure.
Figure 11 is a schematic drawing showing the receptacle for housing the power source in the frame of the load handling device according to an embodiment of the present invention.
Figure 12 is a schematic drawing showing the electrical components mounted to the receptacle according to an embodiment of the present invention.
Figure 12b is a schematic drawing showing a heat sink mounted to the receptacle according to an embodiment of the present invention.
Figure 12c is a schematic drawing showing the power source secured in the receptacle according to the present invention.
Figure 12d is a schematic drawing of a top section of the load handling device showing the receptacle extending through at least one modular sub-frame of the load handling device.
Figure 12e is a schematic drawing of a snap-on cable mount for securing the one or more cables to the frame of the load handling device.
Figure 12f is a schematic drawing of a rear side of the snap-on cable mount shown in Figure 12f.
Figure 13 is a schematic drawing of a connecting block forming a corner bracket of the top or third modular section.
Figure 14 is a schematic drawing of a connecting block forming a corner bracket of the second or middle modular section.
Figure 15 is a schematic drawing of a connecting block forming a corner bracket of the first or bottom modular section comprising the wheel mounts.
Figure 16 is a schematic drawing of one face of the frame showing the connections between the first, second and third modular sections.
Figure 17 are schematic drawings of (a) an assembly of the modular sections to form an open frame structure of the alternative load handling device; and (b) a simplified version of an assembly of the rectangular frames of the modular sections to form the open frame structure of the alternative load handling device.
Figure 18 are schematic drawings of (a) the different modular sections of the alternative load handling device shown in Figure 17a; and (b) an analogy of the different modular sections as separate rectangular frames formed by four connecting blocks.

### Detailed Description

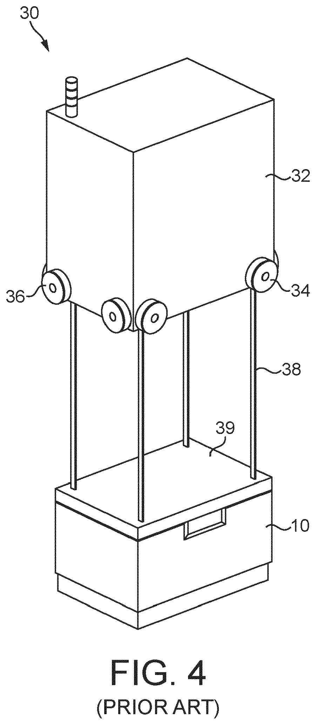

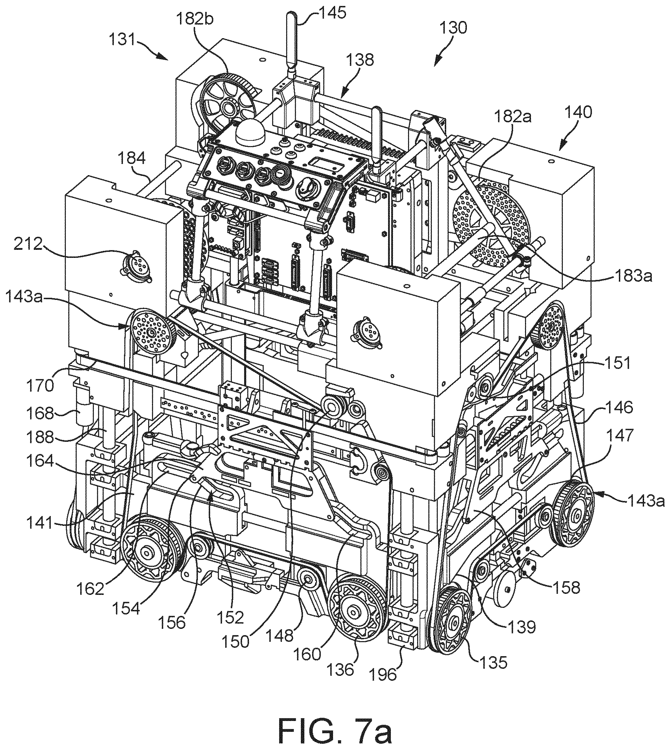

It is against the known features of the storage system such as the grid framework structure and the load handling device described above with reference to Figures 1 to 5, that the present invention has been devised. Figure 7a is a schematic drawing of an example of a load handling device 130 according to the present invention. A typical load handling device in the art comprises a separate rigid framework or chassis and the functional components of the load handling device such as the lifting mechanism, wheel positioning mechanism, wheel assembly, wheel drive assembly and the electrical components, e.g. rechargeable power source and/or control unit are literally fixed or mounted to the framework. Fixing includes various fasteners such as bolts, screws and/or welding. The framework is usually in the form of a tower having a height that is representative of the height of the load handling device. To ensure that the structural integrity of the rigid framework bear the weight of the various functional components of the load handling device, the rigid framework is commonly constructed from metal, e.g. aluminium or stainless steel. Cladding is fixed to the outside of the framework to form a vehicle body housing the functional features of the load handling device. The accumulation of the weight of the rigid framework and the various functional components of the load handling device results in a load handling device having a weight in excess of 150kg. In comparison to the load handling device in the art, the load handling device according to the embodiment of the present invention shown in Figure 7a does not have any cladding and largely comprises an open frame structure 131. The plurality of modular sub-frames are connectable together in a vertical stack to form the open frame structure. Details of the assembly of the open frame structure of the load handling device is further discussed below.

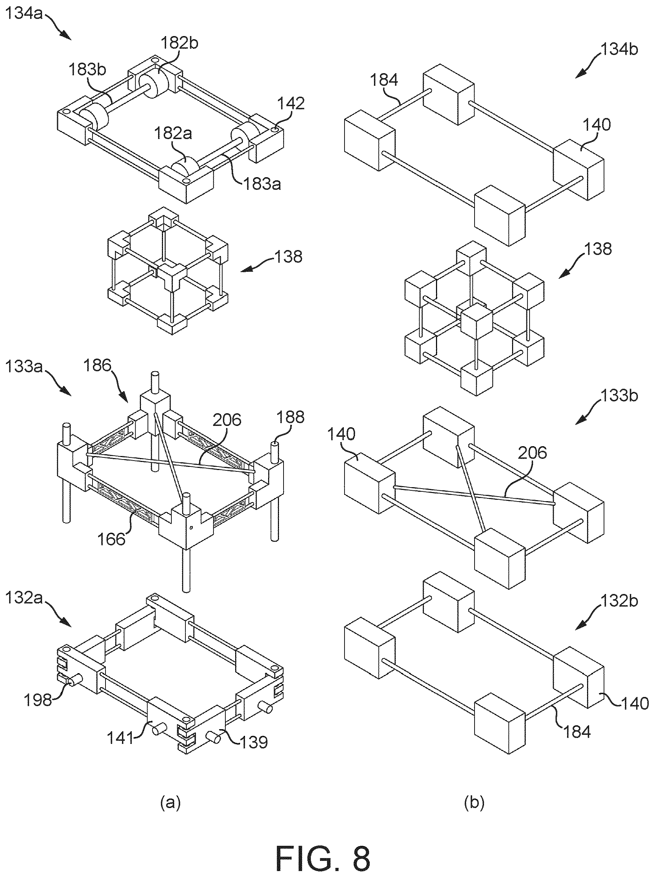

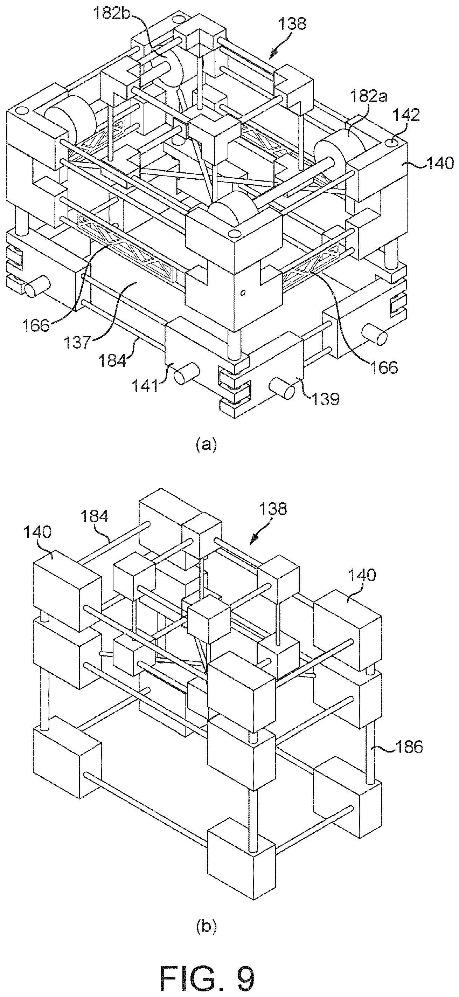

In accordance with an embodiment of the present invention, the construction of the load handling device 130 according to the present invention is based around the principle of having a modular system comprising a plurality of modules or modular sub-frames that are connectable in a vertical stack to provide the different functional characteristics of the load handling device. An example of a load handling device 130 incorporating the inventive concepts of the present invention is shown in Figure 7a and the different modular sections 132(a and b) to 134(a and b) providing the different functional characteristics of the load handling device are shown in Figure 8(a and b) and a schematic drawing of the different modular sub-frames making up the load handling device is shown in Figures 9(a and b). Figure 9a is a schematic drawing showing a simplified version of the frame 131 supporting the main operational components of the load handling device and is the result of the assembly of the modular sub frames 132a, 133a, 134a shown in Figure 8a. Figure 9b is a more simplified drawing demonstrating the building blocks 140 of the load handling device shown in Figure 9a and is the result of the assembly of the modular sub-frames 132b, 133b, 134b shown in Figure 8b. In a further aspect of the present invention, the modular system is integrated into a frame or skeleton 131 such that the frame is assembled from a plurality of modular sub frames that are connectable to one another in a vertical stack to provide the different functional characteristics of the load handling device. Each of the modular sections 132(a and b) to 134(a and b) is provided by a modular sub-frame that are connectable together to form the frame 131 of the present invention. In the particular embodiment of the present invention, the frame 131 is configured as an open frame structure. However, the present invention is not limited to the frame being an open frame structure and the frame can optionally comprises external cladding mounted to the exterior of the frame. For the purpose of explanation of the present invention, the frame in the specific embodiment shown in Figure 7a will be described as an open frame structure.

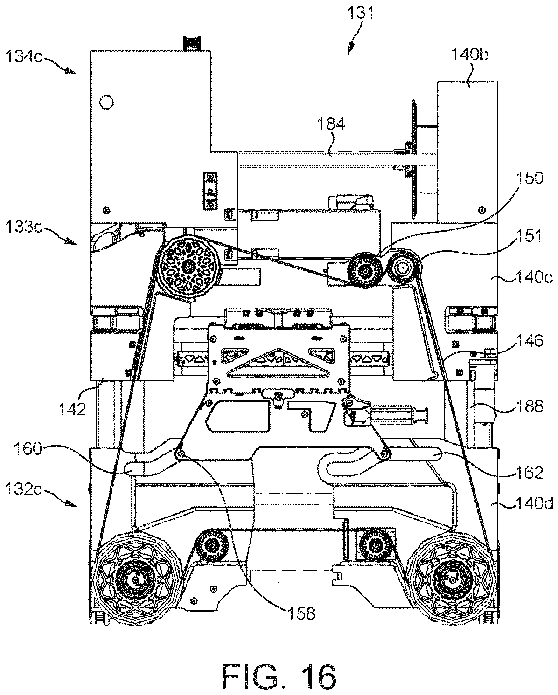

In yet a further embodiment of the present invention, at least a portion of the functional components of the load handling device are integrally formed within the open frame structure of the load handling device. As can be appreciated from an exploded view of one face of the load handling device shown in Figure 16, the different modular sub-frames 132c, 134c, 136c of the load handling device shown in Figure 16 comprise connection points 142 at the corners of the modules 132c, 133c, and 134c to enable the different modular sub frames 132c, 133c, 134c to be vertically stacked. Thus, each connecting block for assembling the modular sub-frames together can be envisaged as a corner bracket. In the particular embodiment of the present invention shown in Figure 8(a and b) and Figure 16, three modular sections 132(a,b,c), 133(a,b,c), and 134(a,b,c) are shown connectable in a vertical stack to form a tier based modular system. Starting from the bottom modular section 132(a,b,c) and increasing in height of the load handling device, the three modular sections for the purpose of explanation of the present invention are labelled first 132(a,b,c), second 133(a,b,c), and third 134(a,b,c) modular sections that are each provided by their respective modular sub-frames. The three modular sections provide the different functional characteristics of the load handling device. In the particular embodiment of the present invention, the different functional characteristics of the load handling device can be shared amongst one or more of the modular sections 132(a,b,c), 133(a,b,c), and 134(a,b,c) of the load handling device 130. For example, the wheel positioning mechanism and the wheel drive assembly can be shared amongst two or more modular sections of the load handling device. The number of modular sections is not limited to three modular sections and the different functional characteristics of the load handling device can be divided amongst any number of modular sections.

The different functional characteristics of the load handling device include but are not limited to the wheel assembly for allowing movement of the load handling device on the grid structure or tracks, a wheel drive assembly to drive the wheel assembly to enable the load handling device to move on the grid structure, the wheel positioning mechanism, otherwise known as the directional change mechanism, the container lifting mechanism for picking up and dropping off a storage container to and from a grid cell of the grid framework structure, and the electrical or electronic components of the load handling device. As discussed above in the introductory part of the patent specification, the electrical components can optionally comprise a control unit or controller 144a for controlling the operation of the wheel drive assembly, the wheel positioning mechanism and the lifting drive mechanism of the container lifting mechanism. Typically, the wheel drive assembly, the wheel positioning mechanism and the drive mechanism of the container lifting mechanism comprise one or more electrical motors. Other electrical components of the load handling device include but are not limited to a communication module for receiving instructions from an external central control system. The communication module 144b comprises a receiver for receiving instructions from an external control unit via a base station and a transmitter for transiting a signal via an antenna 145 comprising data associated with the positioning and/or status of the load handling device on the grid structure. The controller 144a in communication with the communication module 144b controls the movement of the load handling device on the grid structure in response to receiving the instructions from the external central control system. The electrical components can also comprise a J-Switch 144c which is a receiver that is separate to the communication module 144b and is configured for receiving safety signals from an external J-Switch transmitter in an event that there has been a breach into an area occupied by the grid structure. To prevent one or more load handling devices operational on the grid structure from inadvertently crashing into a person on the grid structure and causing injury, it is paramount that the operation of the load handling device on the grid structure is disabled prior to entering the grid structure. Typically, a separate signal is sent to the load handling device independent of the signals sent to the communication module so that it overrides the instructions from the external control unit. When actuated, the J-Switch 144c removes power to the drive mechanisms powering the wheel assembly and/or the container lifting mechanism so that the load handling device is forced to stop on the grid structure.

The open frame structure 131 of the robotic load handling device is configured to carry a power source (not shown) to provide power to one or more of the components of the load handling device such as the wheel assembly to drive the load handling device on the grid, the wheel positioning mechanism to change direction on the grid and container lifting mechanism for operating the container gripper assembly and the electrical components discussed above. Typically, the power source is a rechargeable power source or battery. Examples of rechargeable batteries are Lithium-Ion battery, Nickel-Cadmium battery, Nickel-Metal Hydride battery, Lithium-Ion Polymer battery, Thin Film battery and Smart battery Carbon Foam-based Lead Acid battery. The numerous components of the load handling device are supported by the open frame structure 131. Without proper arrangement of the numerous components, some of which, are integrally formed with one or more of the modular sub-frames, there is a risk that the open frame structure may become too large or bulky as a result of the of the inefficiencies in the packing of the components generating the presence of large pockets of unused free space within the open frame structure. Thus, there is a need to optimize the arrangement of the components of the load handling device so as to optimize use of the available space in the open frame structure and yet provide the different functional characteristics of the load handling device. This, in turn, would optimise the shape and/or size of the open frame structure of the load handling device. In the present invention, this is partly solved by integrating some of the functional characteristics of the components of the load handling device into one or more of the modular sub-frames as further discussed below. Whilst such optimization of the available space is beneficial to reducing the size of the load handling device, there are still pockets of open free space within the open frame structure that are not completely optimised.

In comparison to the power source and the electrical components of the robotic load handling device, in particular, the controller, the communication module and the J-Switch, the design freedom of the other components of the load handling device is very much limited without affecting the proper operation of the load handling device on the grid structure. For example, it is paramount that the wheel assembly is located at the base or in the lower portion of the frame 131 in order for the load handling device to move on the grid structure and the container gripper assembly is located above the container receiving space in order to grip a storage container and lift the storage container from a stack in the grid framework structure into the container receiving of the load handling device. Thus, a balance has to be made between those components of the load handling device which have little design freedom in the open frame structure and optimising the shape and/or size of the open frame structure so as to provide a compact load handling device.

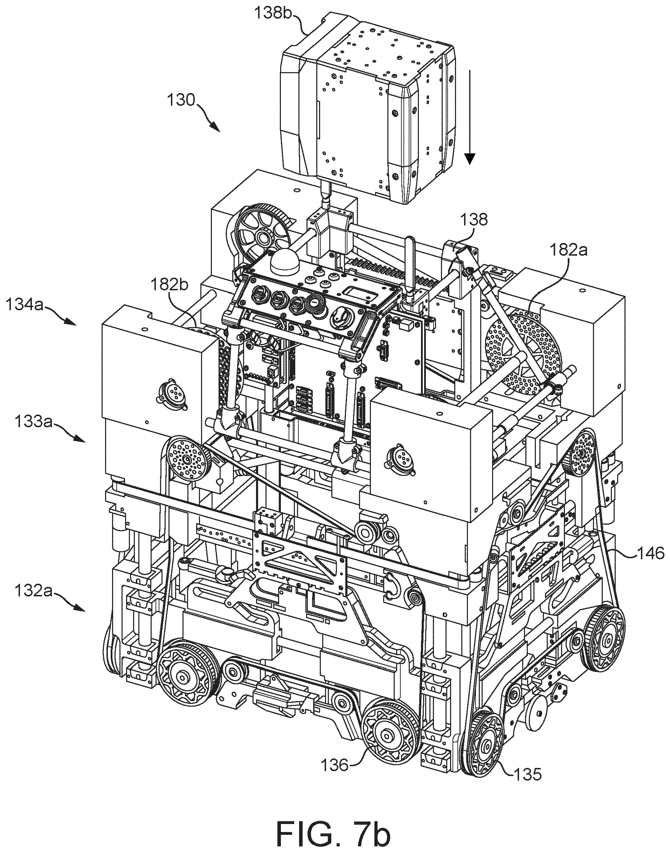

One or more of the electrical components and the power source have greater design freedom in that they are not restricted to any particular location in the robotic load handling device in order for the load handling device to function on the grid structure. However, as the power source represents a significant proportion of the total weight of the robotic load handling device, the position of the power source influences the stability of the load handling device on the grid structure. The lower the power source is positioned within the frame 131 of the load handling device, the more stable is the load handling device. To improve the stability of the load handling device, in an embodiment of the present invention as shown in Figure 7a, the load handling device 130 further comprises a receptacle 138 that functions as a battery chute within the open frame structure 131 for accommodating the power source 138b (see Figure 7b, 8, and 9). In other words, the receptacle 138 is "buried" within the open frame structure 131 such that the receptacle 138 extends vertically through at least one of the modular sub-frames 132, 133, 134 of the open frame structure 131. For the purpose of definition, the term "extends vertically through" also encompasses extending vertically through a horizontal plane to which the at least one of the plurality of modular sub-frames lies in. The receptacle 138 provides a separate area within the open frame structure for the power source 138b to be lowered into the open frame structure without impinging on the other components of the load handling device (see Figure 7b). In order words, the receptacle 138 provides a secure power source compartment or "well" within the open frame structure that is accessible externally above the load handling device to lower the power source into open frame structure of the load handling device. The receptacle is depicted as having a cuboidal shape but may have other shapes, such as a cylindrical shape and is largely dependent on the shape of the power source or its casing. The top end of the receptacle is open that is externally accessible from above the load handling device so as to enable a power source to be lowered into the receptacle. The receptacle 138 comprises one or more electrical connectors or charge receiving elements that is configured to electrically couple to the charge providing elements of the power source. The charge receiving elements are configured to connect to the charge providing elements of the power source when the power source is vertically received in the receptacle and disconnect when the power source is vertically removed from the receptacle.

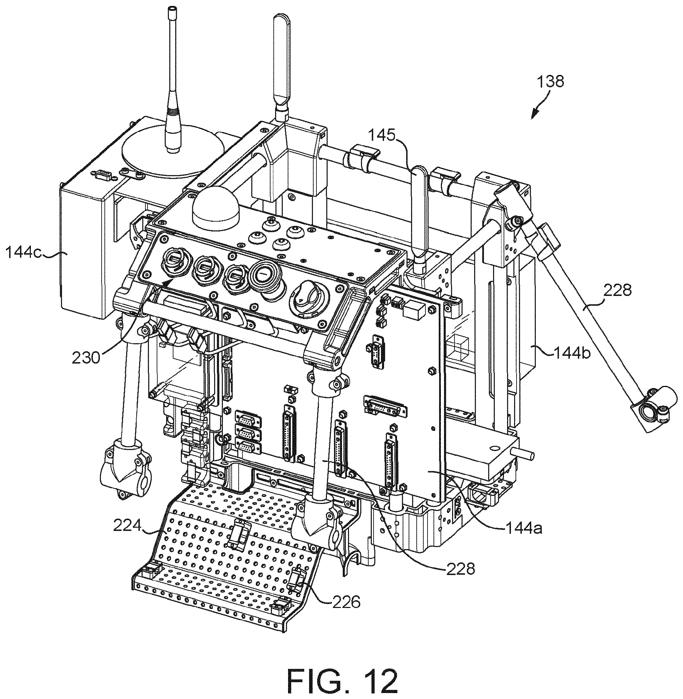

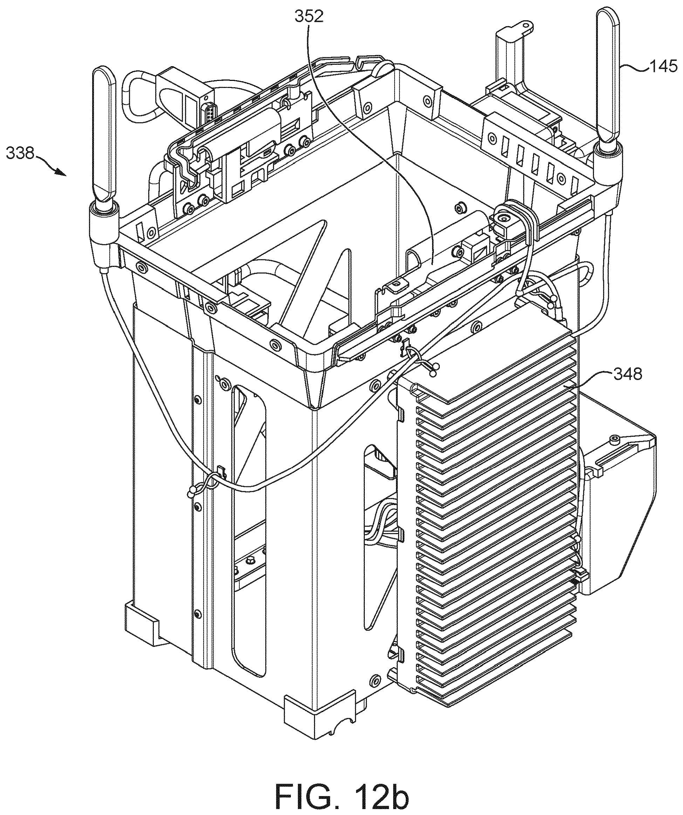

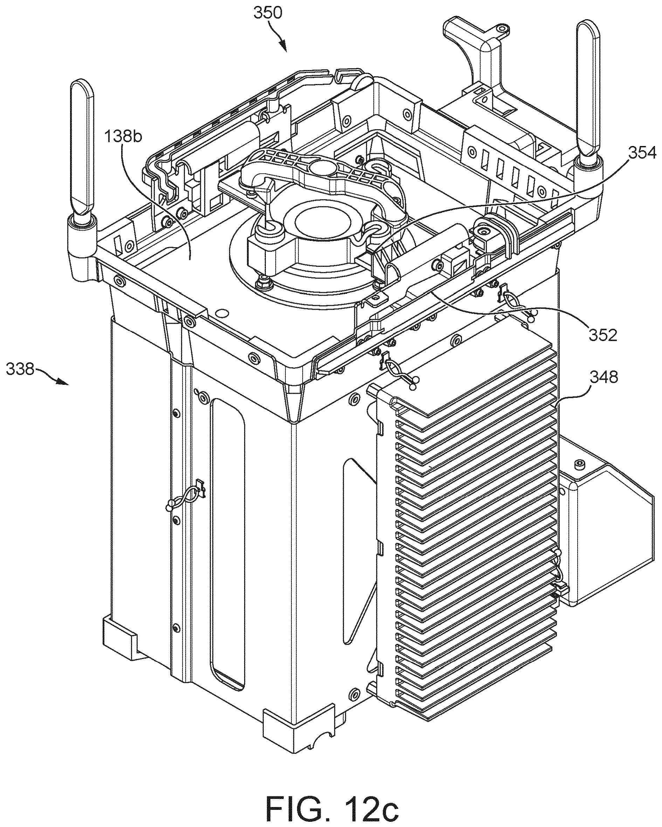

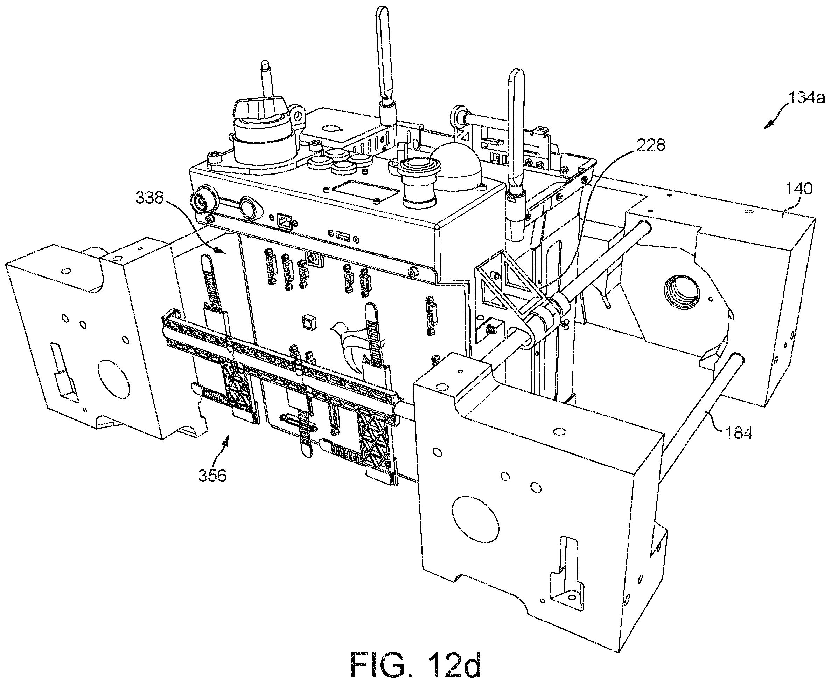

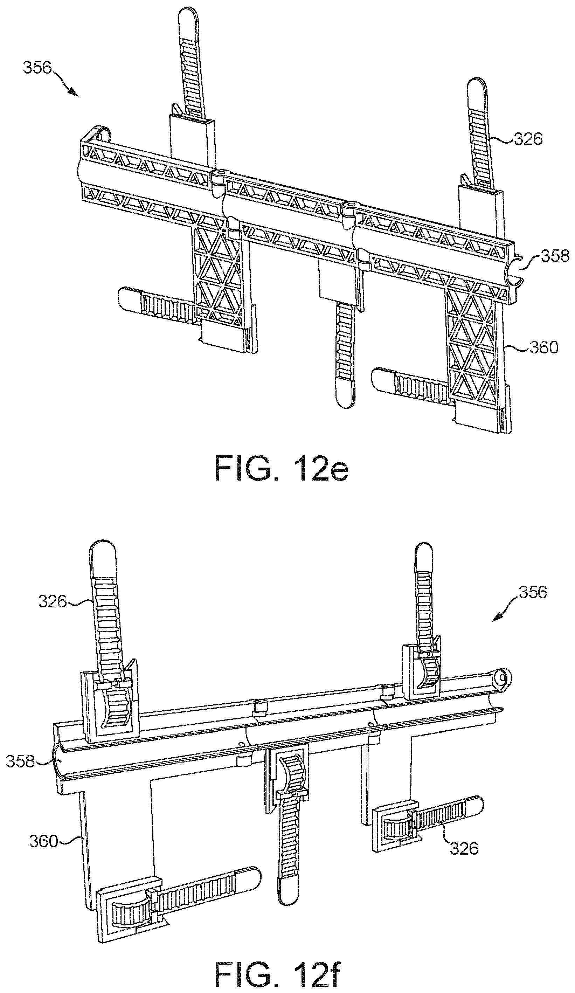

In addition to providing an opening for the power source to be lowered into the open frame structure of the load handling device, the receptacle also provides one or more mounting points for components of the load handling device that are not location dependent in the load handling device. For example, in addition to accommodating the power source, the receptacle can also provide one or more mounting points for mounting one or more of the electrical components that are not location dependent (see Figure 12). In the particular example, the controller 144a, the communication module 144b and J-Switch 144c are shown in Figure 7 and 12 mounted to the receptacle 138. The presence of a receptacle that extends vertically through at least one of the modular sub-frames that doubles up as a receptacle for housing the power source and providing one or more mounting points for mounting one or more of the components of the load handling device allows for a more compact and easy to assemble load handling device.

For ease of explanation of the present invention, in particular the architecture of the open frame structure, the different functional characteristics of the load handling device 130 shown in Figure 7 is explained first. However, the present invention is not limited to the examples of the different functional characteristics of the load handling device described below and other examples that can provide the same functional characteristics of the load handling device are applicable in the present invention. The explanation of the functional characteristics of the load handling device is for the purpose of providing an example of the functional characteristics of the load handling device.

### Wheel Assembly

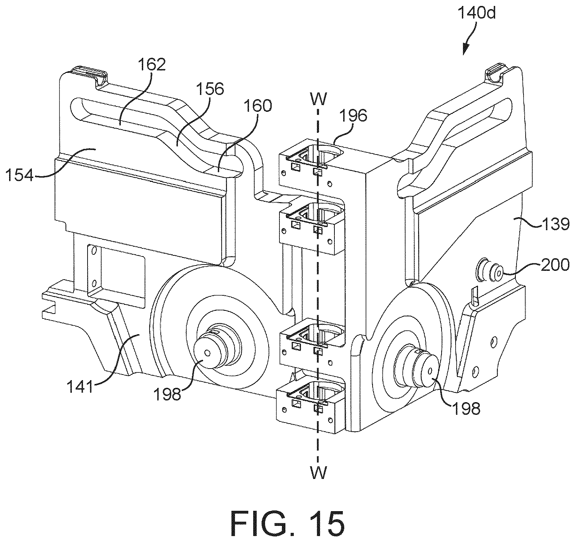

As shown in Figure 7, the wheel assembly comprises a pair of wheels at the front 135 and a pair of wheels at the rear of the load handling device 130. For simplicity of explanation, the wheel assembly comprises a pair of wheels 135 at the front of the load handling device and a pair of wheels at the rear of the load handling device, collectively is termed a first set of wheels 135. The first set of wheels 135 are orientated so that the load handling device is able to move in a first direction, i.e. X Cartesian direction. Similarly to the first direction, to move in a second direction, the second direction being substantially perpendicular to the first direction, i.e. Y Cartesian direction, so that the load handling device can move in both X-Y directions on the grid structure, the wheel assembly comprises pairs of wheels 136 on either side of the load handling device, and for simplicity of explanation these wheels are termed a second set of wheels 136. Thus, to move in the first direction on the grid structure, the first set of wheels 135 engage with the grid structure and the second set of wheels 136 disengage from the grid structure. Similarly, to move in the second direction, the first set of wheels 135 disengage from the grid structure and the second set of wheels 136 engage with the grid structure. The wheels are rotatably mounted to the open frame structure 131 via one or more wheel mounts 139, 141 (see Figure 8 and 15) and are configured to engage with the grid structure to allow the load handling device to move along the grid structure in both X and Y directions.

To enable the load handling device to move in the first and second directions on the grid structure, the load handling device further comprises a wheel drive assembly that is configured to drive each of the wheels of the wheel assembly.

### Wheel Drive Assembly

In the particular example of the present invention, each of the first and second sets of wheels are driven by one or more motors (not shown) via a drive belt assembly 140 described in the PCT Application PCT/EP2021/055372 in the name of Ocado Innovation Limited. In the particular embodiment shown in Figure 7, a drive belt assembly 143a is provided for each set of wheels and comprises a drive belt pulley gear arrangement 143b for engaging with an edge of a pair of wheels 135, 136 on one side of the load handling device. The rim of the pairs of wheels comprises a plurality of gear teeth 147 for cooperating with a drive belt 146. A toothed drive belt engages with both of the wheels. The drive belt 146 is guided by a slave-wheel 148 mounted to the open frame structure 131 of the load handling device 130, and tensioning wheel arrangements 150. The tensioning wheel arrangements 150 are movably mounted to the open frame structure 131 with springs (not shown), and are intended to keep the drive belt 146 taut and maintain engagement of the drive belt 146 with the wheels. A drive wheel 151 is provided, mounted to the open frame structure 131 (see Figure 16). The drive wheel 151 is driven by a pulley and gear arrangement 143a which is linked to an axle or drive shaft of a motor (not shown in figure 7). Rotation of the drive wheel 151 by the motor drives a pair of wheels by being connected the drive belt 146. The wheel drive assembly is provided for each of the pair of wheels of the first 135 and second 136 set of wheels. Thus, each of the pairs of wheels of the first set of wheels 135 are driven in synchronization by their respective drive assemblies to move the load handling device in the X direction on the grid structure. Similarly, each of the pairs of wheels of the second set of wheels 136 are driven in synchronization by their respective drive assemblies to move the load handling device in the Y direction on the grid structure.

The drive wheels 151 on opposed sides of the load handling device 131 may share a common motor axle so that each pair of drive wheels 151 is driven at the same time and at the same speed. As a result only a single motor is required to drive the load handling device 130 forward and reverse in a first x-direction, and only a single motor is required to drive the load handling device 130 forward and reverse in a second y-direction. This arrangement may advantageously reduce the cost in terms of space in the load handling device and the number of parts required. The first set of wheels 135 and the second set of wheels 136 may be selectively driven under the control of the load handling device.

Whilst the particular example of the wheel drive assembly in Figure 7 comprises a drive belt assembly 14a driven by a motor, other arrangements of driving the first and second sets of wheels are applicable in the present invention. For example, it will be appreciated that it may be possible to drive the load-handling device using four motors for each of the first and second direction. For example, all of the wheels in the first and second set of wheels can be driven by individual hub motors comprising an outer rotor that is configured to rotate about an inner hub. In detail, the outer rotor comprises an outer surface that is arranged to engage with the grid structure (e.g. tracks) and an inner surface comprising ring shaped permanent magnets that is arranged to rotate around a wheel hub or the inner hub comprising the stator of the hub motor. Typically, the stator comprises the coils of the hub motor. To drive each wheel of the first 135 or second 136 set of wheels and thus, move the load handling device 130 in the first direction or the second direction on the grid structure, the outer rotor of the hub motor is arranged to rotate about an axis of rotation that corresponds to the central axis of a respective wheel. The outer surface of the rotor can optionally comprise a tyre for engaging with the tracks or rails.

### Wheel Positioning Mechanism

To enable the load handling device 130 to move on the different wheels 135, 136 in the first and second directions, the load handling device 130 includes a wheel-positioning mechanism or directional change mechanism for selectively engaging either the first set of wheels 135 with a first set of tracks 22a or the second set of wheels 136 with a second set of tracks 22b. The wheel-positioning mechanism is configured to raise and lower the first set of wheels 135 and/or the second set of wheels 136 relative to the open frame structure 131 of the load handling device 130, thereby enabling the load-handling device 130 to selectively move in either the first direction or the second direction across the tracks of the grid framework structure 1.

The wheel-positioning mechanism may include one or more linear actuators, rotary components or other means for raising and lowering at least one set of wheels 135, 136 relative to the open frame structure 131 of the load handling device 130 to bring the at least one set of wheels 135, 136 out of and into contact with the tracks. In some examples, only one set of wheels is configured to be raised and lowered, and the act of lowering the one set of wheels may effectively lift the other set of wheels clear of the corresponding tracks while the act of raising the one set of wheels may effectively lower the other set of wheels into contact with the corresponding tracks. In other examples, both sets of wheels may be raised and lowered, advantageously meaning that the body or open frame structure 131 of the load handling device 130 stays substantially at the same height and therefore the weight of the body or open frame structure 131 and the components mounted thereon does not need to be lifted and lowered by the wheel-positioning mechanism.

In the particular embodiment of the present invention, the wheel positioning mechanism comprises a cam mechanism 152 on each side face of the load handling device 130. In Figure 7 and 15, a cam mechanism 152 is shown on the visible X-direction side, and a similar cam mechanism 152 is arranged on the opposing X-direction side (not shown). Similarly, a cam mechanism 152 is shown on the visible y-direction side, and a similar cam mechanism 152 is arranged on the opposing y-direction side (not shown). In other words, the cam mechanism 152 on each side face of the load handling device 130 is configured to raise and lower the pair of wheels relative to the open frame structure 131 of the load handling device 130. Each cam mechanism 152 on opposing side faces of the load handling device is configured to raise and lower respective pairs of wheels of the first 135 or second 136 set of wheels in synchronization relative to the open frame structure 131 of the load handling device 130 in order to move the load handling device in the X or Y direction on the grid structure. In detail, the cam mechanism 152 comprises a cam 154 having a cam profile 156 and a cam follower 158 engageable with the cam profile 156. In the particular embodiment of the present invention shown in Figure 7, the cam follower 158 is a roller which freely rotates about a rotation shaft or spigot. The cam follower 158 is configured to move along the longitudinal direction of the cam profile 156.

The cam 154 comprises a slot having a profile 156 extending longitudinally along the slot between a first or lower limit 160 (valley part) and a second or upper limit 162 (highland part).

Between the limits, the slot extends from the lower limit 160 substantially horizontally, slopes upwards and then continues substantially horizontally to the upper limit 162 with enough space to accommodate the cam follower 158. Movement of the cam follower 158 from the lower limit 160 to the upper limit 162 moves the one or more wheels of the first 135 or second 136 set of wheels in an upward direction to disengage with the tracks. Similarly, movement of the cam follower 158 from the upper limit 162 to the lower limit 160 moves the one or more wheels of the first 135 or second 136 set of wheels in a downward direction to engage with the tracks. One or more wheels of the first 135 or second 136 set of wheels can be coupled either to the cam 154 or cam follower 156 via its respective wheel mount such that movement of the cam follower 156 relative to the cam 154 lowers and raises the one or more wheels of the first 135 or second 136 sets of wheels.

A pair of wheels on one side face of the load handling device can share the same cam and cam follower such that movement of the cam follower along the cam raises or lowers the pair of wheels simultaneously. The pair of wheels at opposing sides of the load handling device represent the first sets of wheels for moving the load handling device in the X direction and the pair of wheels at the other opposing sides of the load handling device represent the second of wheel for moving the load handling device in the Y direction. In other words, the cam mechanism provide a single cam arrangement where a pair of wheels at the side of the load handling device of the first or second sets of wheels is lowered or raised by the same cam and cam follower. However, in the particular embodiment of the present invention shown in Figure 7, the cam mechanism 152 employs a double cam arrangement rather than a single cam arrangement on each side face of the load handling device. A first cam and a second cam are arranged horizontally adjacent. The first cam profile and the second cam profile are substantially identical. Likewise, a pair of followers and are arranged to engage with the respective cams. Instead of a single cam arrangement to raise and lower a pair of wheels, the double cam arrangement on one side face of the load handling device thus provides movement of a pair of wheels on one side face of the load handling device in the raised and lowered position. The use of a double cam arrangement rather than a single cam arrangement on each side face of the load handling device maintains the horizontal orientation of a pair of wheels of the first or second sets of wheels when moving in a raised or lowered position. However, the cam mechanism is not limited to a double cam arrangement on each side face of the load handling device and can comprise a single cam arrangement on each side face of the load handling device.

To move the cam follower 158 relative to the cam 154, in the particular embodiment of the present invention, the cam mechanism 152 comprises a traveller 164 that is configured to move along a side face of the load handling device. Coupled to the traveller 164 is the cam follower 158 such that movement of the traveller 164 along one side of the load handling device 130 raises and lowers one or more wheels of the first 135 or second 136 sets of wheels. The traveller 164 can be configured to move along a rail 166 (see Figure 8) on each side of the load handling device such that movement of the traveller 164 along the rail 166 moves the cam follower 158 along the cam 154 which in turn raises a pair wheels of the first or second sets of wheels when the cam follower is at the upper limit 162 and lowers one or more wheels when the cam follower is at the lower limit 160 of the cam 154. In the particular example of the present invention, the rail 166 for supporting the traveller 164 is integrally formed from the open frame structure 131 of the load handling device 130, more specifically to one of the modular sub-frames of the open frame structure.

The traveller 164 is configured to move along the rail 166 by a cam drive mechanism comprising a cam motor 168 coupled to the traveller 164 via one or more pulleys, spools, belts, and/or gears to move the traveller along one side face of the load handling device. In the particular embodiment of the present invention, the motor 168 is configured to move the traveller 164 along one side of the load handling device by a cam belt 170 having one end anchored to the cam motor 168 and the other end anchored to the traveller 164. The cam belt 170 is wound on a cam spool mounted to the drive shaft of the cam motor 168 such that rotation of the cam spool by the cam motor 168 provides a pulling force on the cam belt 170, which in turn causes the traveller 164 anchored to the cam belt 170 to move along the rail 166. To return the traveller 164 to its initial position, a second motor can provide an opposite pulling force on the traveller 164 to pull the traveller in the opposite direction. Alternatively, the traveller can be biased by a biasing force (e.g. spring) towards a first position corresponding to the lower or upper limits of the cam profile and the motor is configured to provide a pulling force on the traveller against the biasing force to move the traveller towards a second position corresponding to the upper limit or lower limit of the cam profile. To provide the necessary anchorage to raise and lower a pair of wheels relative to the open frame structure of the load handling device, preferably the cam motor 168 is mounted to the open frame structure 131.

To provide synchronized movement of the first or second sets of wheels to move in the X or Y direction on the grid structure, the corresponding travellers for the first or second sets of wheels on opposing side faces of the load handling device can be moved by one or more cam motors.

For example, a single cam motor can provide the pulling force to raise or lower the first set of wheels 135. Similarly, a single cam motor can provide the pulling force to raise or lower the second set of wheels 136. Alternatively, two cam motors can provide opposing pulling forces on the traveller to raise and lower a respective pair of wheels of the first set of wheels or the second set of wheels. In the particular example of the present invention shown in Figure 7, two cam motors are used to the raise and lower the first and second sets of wheels in synchronization. To provide synchronized movement of the first set of wheels and the second set of wheels, each of the two cam motors is configured to rotate in both a clockwise and anti-clockwise direction. A plurality of cam belts 170 are wrapped or extend around the outer periphery or circumference of the open frame structure 131 of the load handling device 130 via connection to the travellers and the cam motors 168 such that rotation of the two cam motors in a clockwise direction raises the first set of wheels 135 and lowers the second set of wheels 136. Conversely, rotation of the two cam motors 168 in anti-clockwise direction raises the first set of wheels 135 and lowers the second sets of wheels 136.

Whilst the particular example of the wheel position mechanism shown in Figure 7 comprises a cam mechanism driven by a cam motor, other arrangements of a wheel positioning mechanism are applicable in the present invention. For example, the wheel positioning mechanism can comprise a compliant mechanism having at least one resiliently deformable member arranged to move under an applied force, e.g. a motor, to cause the wheels to raise or lower as taught in the PCT application PCT/EP2021/055335 in the name of Ocado Innovation. In detail, the first and second sets of wheels can be raised clear of the rails or lowered onto the tracks or rails by means of the compliant mechanism(s) or linkage-sets mounted to the open frame structure on opposed faces of the load handling device.

The direction-change compliant mechanisms are each deformable in first and second directions. When there is no input force, the compliant mechanism is at rest or in a neutral position, i.e. the compliant mechanism is not elastically deformed, and both sets of wheels are level and are resting on a surface. In this arrangement, the load handling device is unable to move in the x- nor y-directions and the load handling device is parked. The elastic deformation of the compliant mechanism is linked to arms holding each of the wheels and movable in a vertical (or z-) direction to raise and lower the wheels.

When a first input force F₁ is provided, the compliant mechanism body deforms in a first direction. The displacement of the mechanism body is translated to a vertical direction to lower the first set of wheels 135, and raise the second set of wheels 136. The wheels of the first set of wheels move downwards to engage with the rails or tracks and to support the vehicle and the wheels of the second set of wheels move upwards to be clear of the tracks. Thus, the load handling device 130 may be driven in the X-direction.

When a second input force F₂ is provided, in a direction opposed to the first input force, the compliant mechanism body deforms in a second direction. The displacement of the mechanism body is translated to operate in a vertical direction to raise the first set of wheels 135, and lower the second set of wheels 136 so that the load handling device is supported by the second set of wheels 118 and may be driven in the y-direction.

The compliant mechanism is connected to the sets of wheels 135, 136 via a transfer linkage. Thus, in this way, the compliant mechanism provides means for changing the operational direction of travel of the load handling device 130.

### Container Lifting Mechanism

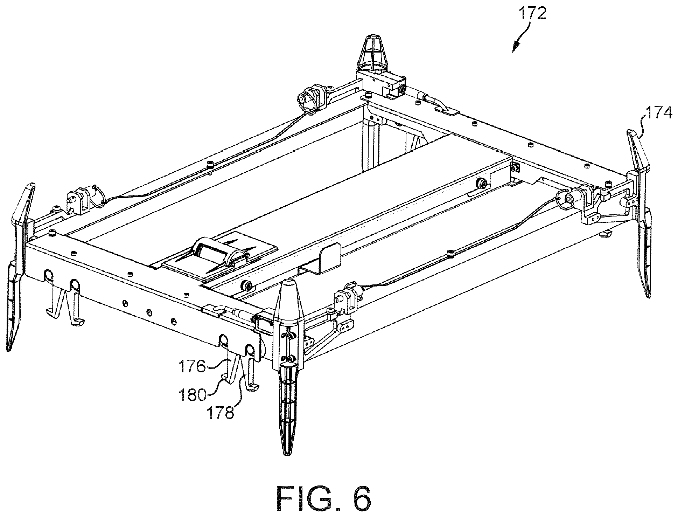

To retrieve a storage container stored in the grid framework structure, the load handling device comprises a container lifting mechanism or container lifting assembly comprising a grabber device or container gripper assembly 172 to releasably grab a storage container from a stack and lift the storage container into a container receiving space of the load handling device (see Figure 6). A winch assembly or crane assembly comprising a plurality of lifting tethers wound on separate spools having one end fixed to the grabber device are used for lifting and lowering the grabber device. The container receiving space is sized so as to accommodate the dimensions of a storage container. The container receiving space may be within the open frame structure of the load handling device as shown in Figure 7 or adjacent the open framework structure by a cantilever arrangement with the weight of the components housed within the open frame structure counterbalancing the weight of the storage container to be lifted by the container lifting mechanism.

The grabber device 172 as shown in Figure 6 is formed as a frame having four corner sections, a top side and a bottom side. The lifting mechanism is used to lift the containers into a container receiving space of the load handling device. For maximum stability and load capacity, typically, four lifting tethers 38 (see Figure 5b) are used to winch the grabber device 172, with one tether disposed nearby or at each of the corners of the grabber device 172, but a different arrangement, for example with fewer tethers, could be used if desired. One end, e.g. first end, of each of the tethers is wound on a spool in the load handling device and the other end, e.g. second end, is fixed to the grabber device 172, typically at each corner of the grabber device, by a suitable bracket (not shown). The number of tethers attached to the grabber device is dependent on the ability to maintain the grabber device horizontal during operation when picking up a container 10 and the ability to withstand the tension applied to the tethers when lifting containers, which could weigh up to 40kg, without extending or stretching, i.e. be inextensible under a predetermined applied tensile stress. To possess the necessary physical properties (Young's Modulus), the tethers are generally in the form of a cable, e.g. rope or even a tape, but other tethers with the necessary physical properties to winch containers are permissible in the present invention.

To grab a container 10, the grabber device 172 comprises four locating pins or guide pins 174 nearby or at each corner of the grabber device 172 which mate with corresponding cut outs or holes formed at four corners of the container 10 and four gripper elements 176 arranged at the bottom side of the grabber device 172 to engage with the rim of the container. The locating pins 172 help to properly align the gripper elements 176 with corresponding holes in the rim of the container.

Each of the gripper elements 176 comprises a pair of wings 178 that are collapsible to be receivable in corresponding holes in the rim of the container and an open enlarged configuration having a size greater than the holes in the rim of the container in at least one dimension so as to lock onto the container. The wings 178 can be driven into the open configuration by a drive gear. More specifically, the head of at least one of the wings comprises a plurality of teeth that mesh with the drive gear such that when the gripper elements 176 are actuated, rotation of the drive gear causes the pair of wings to rotate from a collapsed configuration to an open enlarged configuration.

When in the collapsed or closed configuration, the gripper elements 176 are sized to be receivable in corresponding holes in the rim of the container. The foot of each of the pair of wings comprises a stop 180, e.g. a boss, such that when received in a corresponding hole in the rim of the container, the stop engages with an underside of the rim when in an enlarged open configuration to lock onto the container when the grabber device 172 winched upwards towards the container-receiving portion of the load handling device.

Moving on to the winch assembly of the container lifting mechanism, the winch assembly comprises a lifting drive mechanism, and four tethers wound on four separate spools 182(a and b) (see Figure 7(a and b)). The four tethers extends downwards from their respective four spools 182(a and b) such that a lower end of each tether connects to the grabber device 172. The four spools 182(a and b) can be mounted on separate lifting shafts or alternatively, mounted on the same or a common rotatable lifting shaft 183. In the particular embodiment of the present invention shown in Figure 7(a and b) and 8a, the raising and lowering mechanism is based on the four separate spools 182(a and b) being mounted on separate lifting shafts 183(a and b). More specifically, the four separate spools being divided into a first set of spools 182a and a second set of spools 182b, each of the first and second sets of spools comprising a pair of spools. The lifting tethers 38 wound on the first set of spools 182a are anchored to one side of the container gripping assembly 172 and the lifting tethers 38 wound on the second set of spools 182b are anchored to the other side of the container gripping assembly 172. The first and second sets of spools are mounted for rotation on separate first and second lifting shafts 183(a and b). The first and second lifting shafts are spaced apart for accommodating at least a portion of the receptacle 138 discussed above, i.e. the receptacle is seated between the first 183a and second lifting shafts 183b. The first and second lifting shafts 183(a and b) are shown in Figure 8(a and b) mounted for rotation to one of the modular sub-frames, more specifically, the upper modular sub-frame 134a,b. In Figure 8(a and b), the upper modular sub-frame is defined as the third modular sub-frame 134a,b.

The first and second lifting shafts 183,a,b are driven to rotate the first and second sets of spools 182a,b by a lifting drive mechanism. In the particular embodiment of the present invention, the first and second lifting shafts 183a,b are driven to rotate the first and second sets of spools by a single motor via a plurality of timing pulleys, timing belts and/or gears that is configured to transfer rotation from an output of the single motor to raise and lower the container gripper assembly. In the particular embodiment, the first and second lifting shafts are rotatably driven in synchronization by being connected to the single motor via a single timing belt extending around first and second timing pulleys respectively mounted on the first and second lifting shafts to form an endless loop. The timing belt can be arranged such that the first and second lifting shafts are connect to an inner surface of the timing belt via their respective first and second timing pulleys. This has the effect of rotating the first and second sets of spools in the same rotational direction. Alternatively, the inner and outer surfaces of the timing belt can be arranged to contact the timing pulleys on the first and second lifting shaft such that the first timing pulley connects to the inner surface of the timing belt and the second timing pulley connects the outer surface of the timing belt. This has the effect of causing the first and second lifting shafts to rotate in opposite rotational directions when the single motor rotates, i.e. the first and second lifting shafts counter rotate.

Alternatively, the first and second sets of spools can be driven to rotate in the same direction as the single motor as taught in PCT/EP2021/051531 in the name of Ocado Innovation Limited. In PCT/EP2021/051531, a drive pulley and a first set of timing pulleys is mounted on a rotatable shaft and is common to the first set of spools such that rotation of the rotatable shaft by the single motor by connection to the drive pulley drives the first set of spools. A second set of timing pulleys is connected to the first set of timing pulleys via one or more of a plurality of timing belts such that rotation of the rotatable shaft by the single motor by connection to the drive pulley drives the second set of spools. Various mechanisms can be used to couple the motor to the lifting shaft including but not limited to at least one of the plurality of timing pulleys, timing belts and/or gears so as to transfer rotation from an output of the motor to the lifting shaft. The present invention is not limited to the container lifting mechanism discussed above with reference to the Figure 6, and other container lifting mechanisms for retrieving a storage container from a grid framework structure of a storage and retrieval system are applicable in the present invention.

However, in all of the different examples of the winch assembly discussed above, the lifting shaft(s) carrying the plurality of spools is/are arranged to provide a space or gap for accommodating at least a portion of the receptacle between the first and second sets of spools. As the first and the second sets of spools are mounted for rotation to at least one of the modular sub frames, the mounting of the first and second sets of spools are arranged such that at least a portion of the receptacle extends vertically through the at least one of the modular sub frames.

### Frame Structure

Returning to the modular construction of the load handling device to accommodate the different functional characteristics of the load handling device shown in Figure 9a, the different modular sections 132a, 133a, 134a, of the load handling device can be envisaged by the simplified modular block 132b, 133b, 134b construction forming a vertically stacked, layered structure shown in Figure 9b. In the particular embodiment of the present invention, three modular sections 132(a and b), 133(a and b), 134(a and b) are shown in a vertical stack, each of the three modular sections providing one or more of the functional characteristics of the load handling device. For the purpose of explanation of the present invention, the three modular sections labelled in increasing height of the load handling device comprises a first, second, and third modular section; the first modular section 132(a and b) being in the lower portion of the load handling device and the third modular section 134(a and b) being in the upper portion of the load handling device. As shown in Figure 8(a and b), each of the three modular sections carries at least a portion of one or more of the functional components of the load handling device. The number and position of the different modular sections within the layered structure is not limited to three modular sections shown in Figure 8(a and b), and includes any number of modular sections providing additional functional characteristics of the load handling device or can be shared amongst any number of modular sections.

Each modular section can be envisaged as a rectangular open frame formed by connecting or linking together corner brackets (see Figure 9a), where each corner bracket is shown as a connecting block in Figure 9b. A modular section is built by connecting adjacent connecting blocks in the same horizontal plane by one or more connecting elements 184 to form an open rectangular frame or modular sub-frame 186. Vertically adjacent rectangular frames or modular sub-frames 186 are thus connected together by connecting vertically adjacent connecting blocks 140 as shown in Figure 8(a and b) to form the open frame structure 131. An example of a connecting block 140 is a corner bracket. In a singular modular section, each corner bracket is connected to two other corner brackets in the same horizontal plane by one or more connecting elements 184. The connecting elements can be connecting rods or tubes for linking adjacent connecting blocks (corner brackets) together in a single modular section. The connecting rods can be solid or hollow and is dependent on the connection with the connecting block as will be further explained below. In the particular embodiment of the present invention, the open frame structure is a three dimensional structure defining a volume having an upper portion comprising the receptacle 138 (see Figure 7b), the control unit 144a, the spools 182(a and b) carrying the lifting tethers, and a lower portion comprising the container receiving space 137.

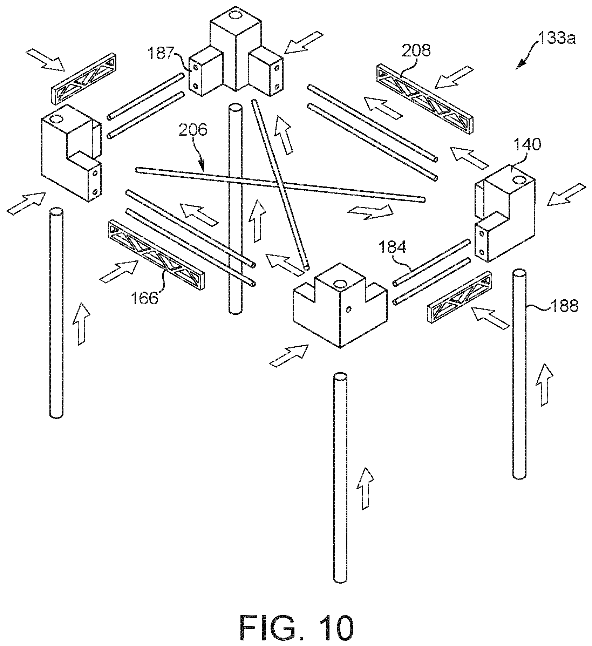

The structural integrity of the open frame structure should be sufficient to not only support the different functional characteristics of the load handling device but also have sufficient flexural rigidity when the load handling device is operational on the grid structure. Various materials can be used in the fabrication of the connecting rods or tubes. These include but are not limited to metal or polymers (e.g. plastics) or ceramic or a combination thereof. To reduce the weight of the load handling device and have the necessary structural properties to support the different functional components of the load handling device, optionally the connecting rods linking adjacent corner brackets together are composed of carbon fibre bound in a polymer matrix (known as carbon fibre rods). To aid with the construction of the rectangular frames forming the modular sections, each of the connecting blocks of one or more of the modular sections comprises an opening or socket 187 (see Figures 10) for insertion of the connecting rods. The connecting rod is fixed to the connecting block by a joint. Various joints can be used to fix the connecting rods to the corner brackets in a modular section. These include various fasteners, glues, welding etc.

A simplified modular section is where the connecting block 140 is a corner bracket such that a modular section comprises four corner brackets. Each of the four corner brackets is directly connected to two other corner brackets in the same horizontal plane to form a simple open rectangular frame or sub-frame as shown in Figure 8b. However, the corner brackets in a single modular section can be indirectly connected to two other corner brackets by one or more connecting blocks intermediate of the corner brackets at the corners of the rectangular frame. Thus, the term "connected" with reference to the corner brackets in each of the modular sections can be broadly construed to mean directly and/or indirectly connected to two other corner brackets.

To construct the load handling device according to the present invention, the different modular sections can be linked together by simply linking vertically adjacent rectangular modular sub-frames 186 together by one or more vertical connecting elements 188 via their respective connecting block or corner brackets 140 to form an open frame structure 131 as shown in the simplified open frame structure in Figures 8a and 8b. In other words, the same corner brackets for connecting to two other corner brackets in a single modular section can be used to vertically connect adjacent rectangular sub-frames together. The corner brackets of vertically adjacent rectangular sub-frames can be mounted to the same vertical connecting element 188 at each corner of the open frame structure such that the vertical connecting element extends though the corner brackets of multiple vertically adjacent rectangular, modular sub-frames. As a result, each of the corners of the open frame structure share the same or common vertical connecting element. To link multiple rectangular sub-frames to the same vertical connecting element at each corner of the open frame structure via their respective corner brackets, the corner brackets intermediate or between the bottom and top rectangular sub-frames have one or more through holes for the vertical connecting elements to extend through the corner brackets when linking together vertically adjacent rectangular sub-frames 186 (see 2^{nd} modular section in Figure 8a). This has the advantage that multiple rectangular sub-frames 186 can be vertically linked together in a stack simply by mounting the multiple rectangular sub-frames to the same vertical connecting element at each corner of the open frame structure to form the load handling device as shown in Figure 8(a and b). This is clearly apparent in the schematic drawing of one face of the open frame structure shown in Figure 16. Here the vertical connecting element is shown extending through multiple blocks at the corners of the open frame structure.

Alternatively, separate vertical connecting elements can be used to connect vertically adjacent rectangular sub-frames at each corner of the open frame structure. The length of the vertical connecting elements connecting vertically adjacent rectangular frames dictates the height of the open frame structure. The connecting elements 188 linking vertically adjacent rectangular sub-frames together can be same type or different type of connecting elements to the connecting elements linking adjacent corner brackets in the same horizontal plane. For example, the connecting elements 188 linking vertically adjacent rectangular frames together can be a connecting rod that is used to link the corner brackets in a single modular section. The linking together of the corner brackets forming the connecting blocks by horizontal 184 and vertical 188 connecting rods is exemplified by the pre-assembly of the 2^{nd} modular section shown in Figure 10 comprising the support or rail 166 for the traveller of the cam mechanism of the wheel positioning mechanism discussed above. A similar process of linking connecting blocks with horizontal connecting rods applies to the assembly of the 1^{st} and 3^{rd} modular sections. Each corner bracket or connecting block 140 comprises one or more sockets 187 that are shaped to receive one or more connecting rods or tubes 184, 188 for linking the connecting blocks together to form a single modular section and vertically adjacent modular sections are linked together in a vertical stack. The arrows in Figure 10 show the direction of the connecting rods or tubes 184 when being inserted into their respective sockets 187 in the connecting blocks or corner brackets 140.

To simplify the construction of the load handling device whilst still accommodating the different functional characteristics of the load handling device, at least a portion of the functional components of the load handling device is integrated into the open frame structure 131 of the load handling device 130, in the sense that at least a portion of the functional components of the load handling device are integral with one or more of the rectangular frames or modular sub-frames of the load handling device. For example, at least a portion of the wheel assembly is integral with one or more rectangular frames modular sub-frames, at least a portion of the wheel drive assembly is integral with one or more rectangular frames modular sub-frames, at least a portion of the wheel positioning mechanism is integral with the one or more rectangular frames modular sub-frames and/or at least a portion of the container lifting mechanism is integral with one or more rectangular frames modular sub-frames.

To integrate at least a portion of the different functional characteristics of the load handling device into one or more of the rectangular frames modular sub-frames making up the open frame structure of the load handling device, one or more of the connecting blocks 140 of one or more of the rectangular sub-frames 186 is fabricated with the functional characteristics of the load handling device in mind. At least a portion of one or more of the functional components of the load handling device is integrated into one or more connecting blocks of one or more rectangular frames. For example, one or more of the corner brackets linking the rectangular frames together may be integrally formed with one or more mounts for a spool, pulley and/or motor rather than having separate mounts for mounting to the frame of the load handling device.

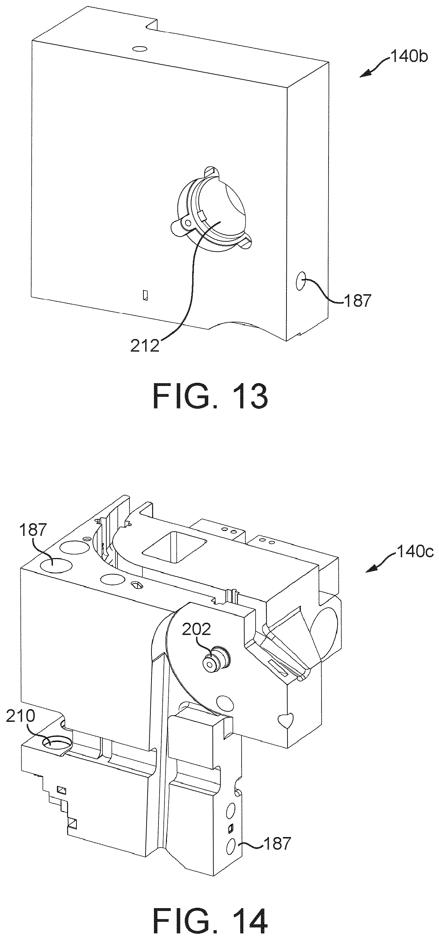

Different connecting blocks can be used to construct the different modular sections and the choice of connecting block is largely dependent on the different functional characteristics of the load handling device. The shape of the connecting blocks becomes more complex as the complexity of the functional characteristics of the load handling device increases. Examples of the various connecting blocks 140(b to d) in a simplified form that form the corner brackets of the open frame structure is shown in Figures 13 to 15 and represent the different corner brackets for assembling the rectangular sub-frames of the different modular sections of the load handling device as demonstrated in Figure 16.

Various lightweight materials can be used in the fabrication of the connecting blocks. Examples of lightweight materials include but are not limited to various lightweight metals, e.g. aluminium or various polymeric materials, e.g. plastic materials, or composite materials (e.g. carbon fibre/polymer composite). Various methods can be used to fabricate the connecting blocks. These include but are not limited to machining from a block, injection moulding or casting. However, as the complexity of the connector blocks increases, particularly when at least a portion of the functional component of the load handling device is made integral with the connecting blocks 140, 140(b to d), more sophisticated fabrication methods can be used. The use of additive manufacturing such as 3D printing provides the ability to fabricate complex connecting blocks such that at least a portion of the functional component of the load handling device can be integrally formed with one or more connecting blocks. The use of additive manufacturing in the fabrication of the connecting blocks, particularly, the corner brackets, allows one or more of the connecting blocks to be topology optimised to take into account the stresses that the connecting blocks would experience in the open frame structure. This is because additive manufacturing or 3D printing has the ability to form complex shapes that cannot be achieved by machining alone. This is particularly the case where the connecting blocks are topology optimised since the outcome of topology optimization tends to result in complex shapes in order to take into account various load constraints that the connecting block would encounter in application in the open frame structure of a load handling device.

The wheels of the wheel assembly are supported by the rectangular modular sub-frame 186 at the bottom or first modular section. To accommodate the wheels of the wheel assembly, each of the connecting blocks, more specifically corner brackets, of the bottom or first modular section is integrally formed with one or more wheel mounts 139, 141 of the first and second sets of wheels. In the particular embodiment of the present invention shown in Figure 15, each of the corner brackets 140d of the bottom modular section is formed in two parts for accommodating two wheel mounts, namely a first and second wheel mount 139, 141. The first wheel mount 139 is configured for mounting a wheel of the first set of wheels 135 and the second wheel mount 141 is configured for mounting a wheel of the second set of wheels 136 (such that there is a total of eight wheels mounted to four corner brackets 140d; two wheel mounts for each of the four corner brackets 140d and arranged to support the open frame structure of the load handling device). In other words, each of the four corner brackets 140d of the first or bottom modular section is integrally formed with two wheel mounts; the first and second wheel mounts 139, 141. To accommodate two wheel mounts in one corner bracket 140d, the two wheel mounts of a given corner bracket are assembled substantially perpendicularly to each other so that the first wheel mount 139 provides a mount for a wheel for moving the load handling direction in the first direction and the second wheel mount 141 provides a mount for moving the load handling device in a substantially perpendicular direction. In the particular embodiment of the present invention shown in Figures 9a and 15, the first and second wheel mounts 139, 141 of the corner brackets comprise a shaft or spigot 198 for rotatably mounting a respective wheel.

Also shown in Figure 9a and clearly in Figure 15, an edge or end of each of the first and second wheel mounts of a given corner bracket 140d comprises one or more bosses or fingers 196 with openings that are vertically aligned or concentric to receive a connecting element 188 through the openings of the one or more bosses 196. The one or more bosses 196 at the edge of the first and second wheel mounts 139, 141 are spaced apart so that the bosses 196 of both of the first and second wheel mounts of a given corner bracket interdigitate and that the openings in their respective bosses axially align along a wheel positioning axis, W-W (see Figure 15) for receiving a connecting element 188 when the bottom or first modular section is vertically linked to the second modular section directly above as shown in Figure 16. The wheel positioning axis W-W is the axis along which the respective first or second set of wheels are raised or lowered depending on the direction of movement on the grid structure. In Figure 15, the wheel positioning axis W-W is shown as a vertical axis along which the first and second sets of wheels are raised and lowered.

In operation, the first and second wheel mounts are arranged to move along a common vertical connecting element via their respective bosses. For a given corner bracket, the bosses 196 at the edge of the first and second wheel mounts 139, 141 of the corner bracket 140d are sufficiently spaced apart so that when the spaced apart bosses interdigitate, each of the first 139 or second 141 wheel mounts of the corner bracket 140e can move independently of the other second 141 or first 139 wheel mounts along its vertical connecting element, i.e. along the wheel positioning axis W-W. This is to allow a pair of wheels of the first set of wheels to be raised or lowered independently of the pair of wheels of the second set of wheels when mounted to the corner brackets. This is repeated for the other corner brackets of the bottom modular section such that all four corner brackets of the bottom modular section provide wheel mounts for supporting all of the wheels of the first and second sets of wheels, i.e. eight wheels. To enable the first and second wheel mounts to move along the vertical connecting element, the bosses 196 at the edges of the first and second wheel mounts may comprise one or more slide bearings to assist with the movement of the first and second wheel mounts along their respective vertical connecting element. Various slide bearings known in the art can be used to assist with the sliding of the first and second wheel mounts. These include but is not limited to the use of PTFE based slide bearings.

Each of the wheel mounts of the corner bracket comprises an integrally formed wheel shaft 198 for rotatably mounting a wheel onto the shaft. Each corner bracket 140d for mounting the wheels of the wheel assembly is connected to two other corner brackets to form a rectangular sub-frame by one or more connecting elements 184. In the particular example of the present invention shown in Figure 8a and 9a, each of the corner brackets 140d is connected to two other corner brackets in the same horizontal plane by two connecting rods 184 receivable in openings or sockets 187 in the corners brackets (see Figure 16). However, the number of connecting elements 184 for connecting adjacent corner brackets in the same horizontal plane to form a rectangular frame of the 1^{st} modular section comprising the wheel assembly is not limited to two connecting elements and can be any number of connecting elements to provide the necessary structural rigidity of the rectangular frame.

To drive rotation of the first and second sets of wheels, at least a portion of the wheel drive assembly discussed above can be integrated into one or more of the rectangular sub-frames of the open frame structure of the load handling device. In the case where the wheel drive assembly comprises a drive belt assembly 143a at each side face of the load handling device discussed above, the mounts for the drive and the slave wheels for carrying the drive belt can be integrally formed with one or more of the connecting blocks 140d (see Figure 15) of one or more of the rectangular sub-frames. For example, in the particular embodiment of the present invention shown in Figure 15, each of the corner brackets 140d comprising the wheel mounts 139, 141 for the wheel assembly additionally comprises a mount 200 for the slave wheels 148 of the drive belt assembly such that the drive belt travels around the outer periphery of the wheels 135, 136 mounted to the corner bracket 140d and around the slave wheel 148 on the same corner bracket 140d (see Figure 7 and 15). As each corner bracket 140d is integrally formed with two wheel mounts 139, 141 for the wheels orientated perpendicular to each other to cover the travelling directions of the load handling device on the grid structure, the mounts 200 for their respective slave wheels can be integrally formed with each of the wheel mounts 139, 141 of the corner bracket 140d.

The drive pulleys for driving the rotation of a pair of wheels of the first or second set of wheels are mounted to the corner brackets 140c of the rectangular sub-frames located higher in the vertical stack such that drive belt extends around a pair of wheels at one side face of the load handling device and around the drive wheels mounted to the higher modular sections. In the particular embodiment of the present invention, the drive wheels for driving the drive belt of each wheel drive assembly are mounted to a shaft or spigot 202 integrally formed with the corner brackets 140c forming the rectangular sub-frame of the second modular section. As a result, a pair of wheels of each of the first and second sets of wheels are driven by a drive belt that connects the slave wheels in the first modular section 132a and the drive wheels mounted to the corner brackets of the second modular section 133a. This is repeated for the other drive assemblies at each side face of the load handling device as shown in Figure 7. Also shown in Figure 7 is that each wheel drive assembly for driving a pair of wheels additionally comprises the tensioning wheel arrangement discussed above to ensure that the drive belt around a given pair of wheels remain taut. In the particular example of the load handling device shown in Figure 7, one or more of the corner brackets of the rectangular frame supporting the wheels also comprises the wheel tensioning arrangement.

The drive assembly is not limited to the drive belt assembly discussed above and the connecting blocks of the rectangular frame carrying the wheels of the wheel assembly can integrated with a mount for carrying a hub motor discussed above. Thus, each corner bracket of the rectangular frame of the first or bottom modular section can be integrally formed with a mount for a drive assembly comprising a hub motor; wherein the inner hub of the hub motor is mounted to the corner bracket. Since each of the corner brackets of the first or bottom modular section is formed with two wheel mounts for mounting two wheels, each corner bracket is integrally formed with two mounts for mounting two hub motors; one to mount a wheel in the first direction and the other to mount a wheel in the second direction.

To change direction on the grid structure, the load handling device comprises a wheel positioning mechanism. Various wheel positioning mechanisms are known in the art, some of which are discussed above. Considering that sufficient force is required to vertically lift a pair of wheels of a given set of wheels relative to the open frame structure, at least a portion of the wheel positioning mechanism is mounted to a rectangular sub-frame of the open frame structure that has been reinforced to bear the weight of the pair of wheels at each side face of the load handling device. In the particular example of the load handling device shown in Figure 7 and 10, the rectangular sub-frame of the second modular section is reinforced by one or more struts or braces 206 and is termed as "a middle halo" since it is located substantially middle of the height of the load handling device, i.e. between the 1^{st} and 3^{rd} modular sub-frames (see Figure 8a). Reinforcement of the middle halo is provided by one or more cross braces 206 extending across the rectangular frame. The particular example of the wheel positioning mechanism shown in Figure 7 is based on the cam mechanism discussed above comprising a cam, cam follower moveable along the cam and a traveller for moving the cam follower. The traveller is configured to move along a rail 166 on one side face of the load handling device to raise a pair of wheels. The rail 166 for supporting the traveller for raising a pair of wheels comprises the horizontal connecting elements extending between the corner brackets of the rectangular frame of the middle halo such that the traveller moves along the connecting elements 184 connecting the corner brackets 140 on one side face of the load handling device.

The connecting elements for supporting the traveller of the middle halo thus functions as an overhead rail. In the particular example of the present invention shown in Figure 7, the traveller is slideably mounted to the connecting elements connecting the corner brackets in the same horizontal plane. This is repeated for the other pairs of wheels at each of the side faces of the load handling device. To support the traveller, at least two connecting elements 184 extend between the corner brackets 140 on one side face of the load handling device. One or more inserts 208 are sandwiched between the two connecting elements 184 extending between the corner brackets 140 to provide flexural rigidity of the connecting elements extending between the corner brackets 140 to prevent excessive bending of the connecting elements when the traveller moves along the connecting elements. In the particular example of the present invention, the cam mechanism for each of the pairs of wheels of the first and second sets of wheels is based on a double cam arrangement as discussed above; wherein the traveller is configured to raise and lower a given pair of wheels via the double cam arrangement. The cam for cooperating with the cam follower can be mounted to the corner brackets supporting the wheels of the wheel assembly or be integrally formed with the corner bracket. With the double cam arrangement on each side face of the load handling device, two cams 154 are mounted to each corner bracket that cooperate with two respective cam followers to cater for the vertical movement of the wheels orientated in the first and second direction (see Figure 15). Thus, for a given corner bracket, a first cam 154 is mounted to or integrally formed with the first wheel mount 139 of the corner bracket and a second cam 154 is mounted to or be integrally formed with the second wheel mount 141 of the corner bracket 140d such that when both the first and second wheel mounts of the corner brackets are brought together, the cams 154 on the different side faces of the load handling device cooperate with their respective cam followers. Similar corner brackets are used for mounting the other wheels of the wheel assembly.

As the cam follower travels along the cam, an upward or downward force is applied to a respective corner bracket carrying a wheel of the first or second sets of wheels which causes the wheel to raise or lower depending on the direction of travel of the load handling device on the grid structure. As discussed above, each corner bracket for mounting the wheels of the wheel assembly is formed from two interdigitated parts, namely a first part 139 and a second part 141, each of the first and second part comprising a wheel mount for a wheel. The first part providing a wheel mount for a wheel of the first set of wheels and the second part providing a wheel mount for a wheel of the second set of wheels, and is respectively defined as a first wheel mount 139 and a second wheel mount 141. The bosses or fingers 196 at the edge of the first and second wheel mounts are sufficiently spaced apart such that when the bosses interdigitate, the first wheel mount can move independently of the second wheel mount axially along its connecting vertical connecting element. Where the vertical connecting elements are connecting rods, the diameter of the openings in the one or more bosses 196 of each of the first 139 and second 141 wheel mounts of the corner brackets are slightly larger than the diameter of the connecting rods 188 so as to allow the first and second wheel mounts 139, 141 of the corner brackets to be moveable vertically when a force is applied in a vertical direction. The cam 154 for cooperating with the cam follower 158 can be integrally formed with its respective corner bracket 140d comprising the wheel mounts of the wheel assembly as shown in Figure 15. Two cam 154 are shown integrally formed with the corner bracket 140e, one for each of the wheel mounts 139, 141. As can be appreciated from the description above in connection with Figure 6 and 15, at least a portion of the wheel positioning mechanism is integrally formed with the connecting blocks, more particularly, the corner brackets, of one or more rectangular sub-frames forming the different modular sections of the load handling device.

Also shown in Figure 7, is that the motor 168 for moving the traveller along the connecting elements is mounted to the corner brackets 140c of the rectangular frame forming the middle halo of the open frame structure. One or more mounts for one or more motors are integrally formed with the connecting blocks, more specifically the corner brackets of the rectangular frame of the middle halo. As shown in Figure 14, one or more openings 210 are integrally formed in the corner bracket 140c for receiving a motor shaft of the motor. The corner bracket 140c also supports a spool for taking up the belt connected to the traveller as the spool rotates such that when the motor rotates in a clockwise direction, the belt is wound on the spool and when the motor rotates in an anti-clockwise direction, the belt is unwound from the spool.

In addition to at least a portion of the wheel positioning mechanism being integrally formed with the connecting blocks or corner brackets forming the rectangular sub-frames of one or more modular sections, at least a portion of the container lifting mechanism, more specifically the winch assembly, is integrally formed into the rectangular frame of one or more modular sections. The first and second lifting shafts 183(a and b) for driving rotation of the four spools carrying the lifting tethers connected to the grabber device is rotatably mounted to a rectangular sub-frame of a modular section. In the example shown in Figure 8a, the first and second lifting shafts 183(a and b) are rotatably mounted to the rectangular sub-frame of the third modular section 134a,b,c. The first and second lifting shafts 183(a and b) are shown in Figure 8a and 9a extending across the rectangular sub-frame. The first and second lifting shafts are substantially parallel and spaced apart to define a space for accommodating the receptacle. Opposing ends of the first and second lifting shafts are shown rotatably mounted to a respective connecting block 140b via a shaft opening 212 in the connecting block as shown in Figure 13. The shaft opening 212 in the connecting block is sized to rotatably receive an end of the lifting shaft 183(a and b). A bearing may be incorporated into the shaft opening 212 for mounting to the end of the lifting shaft 183(a and b)

In the particular embodiment of the present invention, the container receiving space 137 (see Figure 9a) for accommodating a storage container when lifted by the grabber device is housed within the open frame structure of the load handling device; more specifically in the region of the 1^{st}, 2^{nd} and the 3^{rd} modular sections (the 3^{rd} modular section supporting the spools carrying the lifting tethers). However, as vertically adjacent modular sections are connected together by their respective connecting blocks via vertical connecting rods, it is necessary that the grabber device is guided when it is lifted and lowered in and out of the container receiving space so as to prevent the grabber device fouling the connecting blocks. In the particular embodiment of the present invention, downwardly extending guides (not shown) are mounted to the connecting blocks 140c of the 2^{nd} modular section of the load handling device, one at each corner of the rectangular frame so as to guide the grabber device as it is lowered or raised into the container receiving space 137. Each of the guides downwardly extends within the interior of the container receiving space and is shaped to comprise two perpendicular guiding plates for accommodating a corner of the grabber device shown in Figure 6.

As the container lifting mechanism is configured to lift and lower a storage container which can weigh up to 40kg, the connecting elements extending between the corner brackets can be braced by one or more bracing elements 206 to strengthen the rectangular frame of the modular section supporting the spools carrying the lifting tethers.

A plurality of the rectangular frames 186 are assembled together in a vertical stack to provide the different functional characteristics of the load handling device discussed above. Vertically adjacent rectangular frames are connected together by vertical connecting elements 188 to form the open frame structure 131 supporting the different functional characteristics of the load handling device. The receptacle 138 for receiving the power source is shown in Figure 8(a and b) being mounted to the cross brace 206 of the second modular section and extends upwardly of the open frame structure such that the receptacle 138 extends vertically through at least one of the plurality of modular sub-frames 186. The receptacle 138 comprises a base and sidewalls/end walls upwardly extending from the base arranged to form a housing having an open top end for receiving and containing the power source in a vertical direction from above the receptacle. To ensure that the receptacle 138 does not greatly increase the weight of the load handling device, like the construction of the open frame structure 131, the receptacle 138 is shown as a frame like structure fabricated from a plurality of connecting blocks connected together by a plurality of connecting elements to define a power source compartment for receiving a power source. A more simplified structure of the receptacle 138 in Figures 8(a and b) shows the receptacle to comprise eight connecting blocks, each of the eight connecting blocks is connected to two other connecting blocks in the same horizontal plane by one or more horizontal connecting elements and one other connecting block in the vertical plane by one or more vertical connecting elements to form a cuboidal frame structure. As discussed above, the receptacle 138 comprises one or more electrical connectors or charge receiving elements that is configured to electrically couple to the charge providing elements of the power source when the power source is lowered into the receptacle. The electrical connector of the power source compartment may comprise a male connector and the electrical connector of the power source may comprise a female connector or vice versa. The electrical connectors may alternatively comprise electrical contacts.

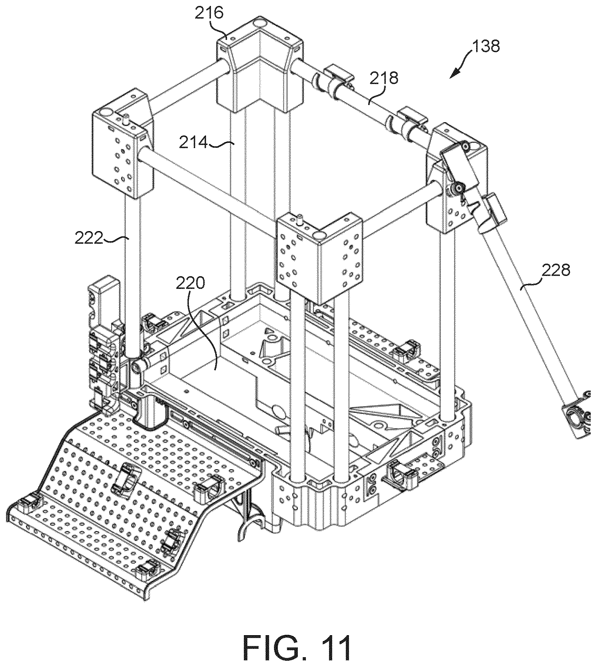

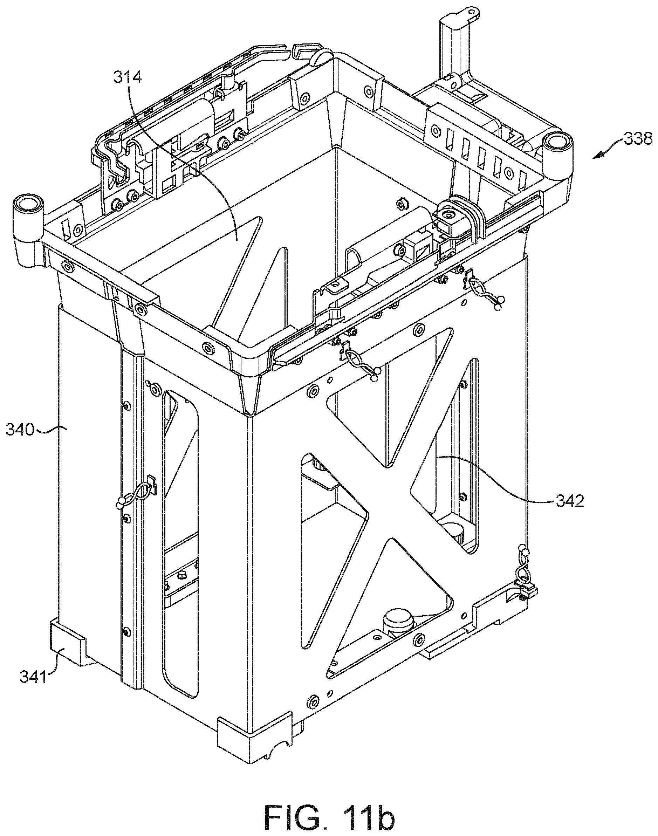

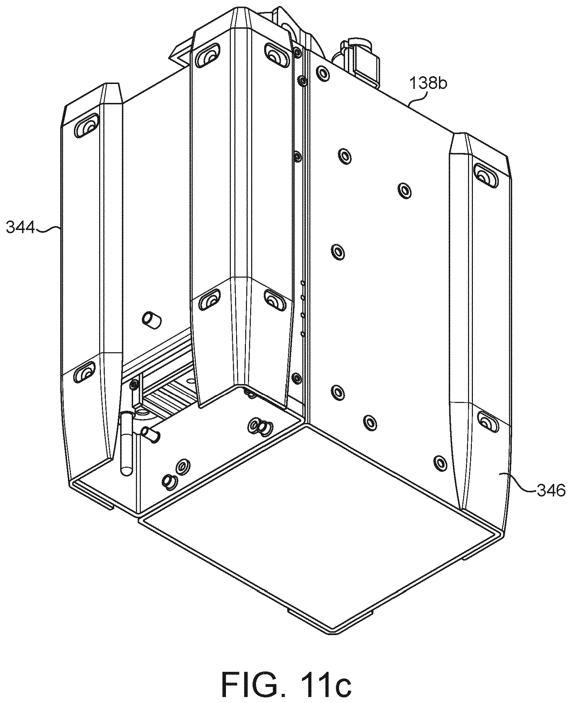

The receptacle 138 is depicted in Figure 11 as having a cuboidal shape but other shapes, such as a cylindrical shape, is possible and is largely dependent on the shape of the power source. The receptacle 138 has an open top end 214 for receiving a power source in a substantially vertical direction (see Figure 7b). The open top end 214 is shown as comprising four connecting blocks or brackets 216, each of the four connecting blocks 216 is connected to two other connecting blocks 216 by horizontal connecting elements 218 to form a substantially rectangular open frame for receiving the power source. To support the power source, the receptacle 138 comprises a base 220 that is sized to seat the power source when placed in the receptacle 138. Extending upwardly from the base 220 are vertical connecting elements 222 having one end connected to the corners of the base 216 via a suitable opening or socket in the base and the other end connected to the rectangular open frame. The base 220 can, optionally, comprise the charge receiving elements for electrically coupling with the charge providing elements of the power source when the power source is seated on the base 220. The structure of the receptacle 138 is not limited to the open structure shown in Figures 8(a and b), 9(a and b), 11 and 12 and the sidewalls of the receptacle can be solid to form an enclosure. For example and as shown in Figure 11b, the receptacle 338 can be fabricated metal, e.g. aluminium, steel, etc. The advantage of using metal over materials in the fabrication of the receptacle is to block electromagnet signals emanating from the power source 138b and/or battery management system interfering with the signals from one or more electronic components essential for the operation of the load handling device such as the controller 144a, the communication module 144b and J-Switch 144c (see Figures 7 and 12), i.e. functions as a Faraday cage and shield.

Various methods can be used in the fabrication metal receptacle. These include but is not limited to casting, folding a sheet metal blank etc. In a preferred embodiment, the receptacle is formed from folding a sheet metal blank along one or more fold lines to form a battery box 340 comprising a bottom wall (or base), upwardly standing sidewalls and end walls. Alternatively, the bottom wall and/or upwardly standing sidewalls and/or end walls can be separately fixed together by various fasteners. Examples of fasteners include but is not limited to riveting, welding, adhesive and/or simple bolts. To reduce the weight of the receptacle and yet function as a Faraday cage, the upwardly standing walls and/or end walls comprise one or more openings 342. The openings can be cut out in the upwardly standing walls and/or end walls of the battery box 340 and sized to block electromagnetic waves emanating from the power source housed within the receptacle. Not only fabricating the receptacle from metal, preferable sheet metal helps to reduce or blocks interfering signals from the power source 138b but also offers a continuous guide surface for guiding the power source 138b when lowered into the receptacle 338 via the open top end 314 of the receptacle. This helps to properly guide the power source 138 into engagement with the electrical connectors. To help guide the power source 138b into the receptacle, the power source 138b comprises one or more guide members 344 that are configured to cooperate with the corners of the receptacle in a sliding relationship. As the receptacle has a cuboidal shape, the guide members 344 are mounted to the corners of the power source. To help locate the power source into the receptacle 138, 338, each of the guide members 334 comprise a locating portion 346. In the particular embodiment of the present invention, a portion of the guide member 344 is chambered or is tapered to form the locating portion 346 for correctly positioning the power source 138b into the receptacle 138, 338. In comparison to forming the receptacle from a plurality of connecting blocks connected by a plurality of connecting elements, the continuous guide surface at the corners of the battery box 340 enables the power source to be lowered into the receptacle 338 with little or no resistance.

As the power source is housed within the receptacle 138, one or more electrical components that receives power from the power source such as the control unit, communication module and the J-switch are shown in Figure 12 are mounted to the receptacle 138, more specifically to one or more exterior sides of the receptacle 138. Signals generated by the one or more electrical components are fed from their respective electrical components to the various components of the load handling device via one or more cables, i.e. the motors to drive the drive mechanism for the wheels, wheel positioning mechanism and/or container lifting mechanism. To prevent the one or more cables from snagging one or more of the moving components of the load handling device, a cable tray 224 is mounted to the receptacle 138 to guide the one or more cables to their relevant components in the load handling device, e.g. motors, and to support the one or more cables. One or more cable retainers 226 (e.g. cable tie) can be used to secure the cables to the cable tray 224. The cable tray 224 is shown comprising a plurality of holes that is sized to engage with a plurality of anchoring elements (not shown) of the cable retainers 226 to retain the cable to the cable tray 224. The cable tray 224 is as a plate having one or more bends to guide the one or more cables from the electrical components mounted to the receptacle 138 to drive their respective components in the load handling device.

In addition or alternative to the cable tray, one or more cables can be secured to the frame or frame structure 231 of the load handling device. In the example shown in Figure 12d and clearly shown in Figures 12e and 12f, a cable mount 356 comprising one or more cable retainers 326 for securing one or more cables to the cable mount 356 and the cable mount 356 being attachable to at least modular sub-frame. The cable mount provides a region on the frame 231 for securing one or more cables to the frame itself. The example shown in Figure 12d show the cable mount 356 is attached to the horizontal connecting element 184 of the third modular section 134a of the frame by a snap-fit joint 358. A portion of the cable mount has a cross-sectional profile that is configured to snap-fit on the horizontal connecting element 184 of the modular sub-frame. In the particular example of the present invention shown in Figures 12e and 12f, the snap-fit joint has a substantially semi-circular cross-sectional profile that is shaped to snap-fit on the horizontal connecting element 184 of the frame of the load handling device. However, the present invention is not limited to the cable mount being attached to the modular sub-frame by a snap-fit joint and can optionally or additionally, be secured to the connecting block 140 by a fastener known in the art, e.g. screw or bolt.

Also shown in Figures 12e and 12f, is that each of the one or more cable retainers 326 can comprise a cable tie for securing the one or more cables to the cable mount 356. The cable ties can be integrally formed with cable mount 356 or alternatively, the cable mount 356 comprises a mounting surface comprising one or more openings for securing the cable tie to the cable mount 356. The advantage of the cable mount over the cable tray 224 discussed above is that the cable mount can be mounted to any part of the frame due to its ability to be snap-fitted on the connecting element 184 of the frame and therefore, allows the one or more cables to be secured to different portions of the frame. The cable mount 356 can comprise one or more branches 360 extending from the snap fit joint for guiding the one or more cables to one or more electrical components in different parts of the load handling device. The one or more branches 360 can comprise the one or more cable retainers 326 for securing one or more cables to the branches. The cable mount can be integrally formed as a single body from a plastic material, e.g. additive manufacturing, injection moulding. The plastic material provide electrical insulation and be able to integrate the snap-fit joint into the cable mount.

Considering that the weight of the power source represents a significant portion of the weight of the load handling device, it is essential that the receptacle is properly secured to the open frame structure of the load handling device to withstand forces as a result of the power source recoiling when the load handling device accelerates on the grid structure. In the particular embodiment of the present invention, the receptacle 138 is secured to the cross brace 206 of the second modular section 133a. For example, securement of the receptacle 138 to the open frame structure is provided by the cross bracing members extending through one or more openings in the base 220 of the receptacle 138. One or more struts 228 can also be used to provide further support of the receptacle 138 to the open frame structure. In the particular embodiment shown in Figure 7, 11 and 12, the one or more struts 228 is anchored to from a fixing point on the receptacle 138 and extends to a fixing point on the modular sub-frame of the second modular section. In the particular embodiment of the present invention shown in Figure 7, the one or more struts comprises a rod or tube fixed to a horizontal connecting element 218 forming the opening of the receptacle 138 to a fixing point on the horizontal connecting element of the modular sub-frame forming the third modular section 134a,b,c. Alternatively, the receptacle 138 can be integrally formed to at least one of the modular sub-frames.

For the receptacle shown in Figure 11b, the bottom wall of the receptacle 338 comprise mounting feet or brackets 341 for mounting or supporting the receptacle 338 to the cross brace 206 of the second modular section (see Figure 11b).

As the receptacle 138 is exposed above the open framework structure, other electrical components that need immediate access external of the load handling device can be mounted to the receptacle. These include but is not limited to the various switches and/or power isolators 230 to the power source. As the receptacle 138 represents the highest point of the load handling device, one or more antennas 145 can be mounted to the receptacle 138 to receive signals from one or more base stations. In addition to providing one or more mounting points for mounting one or more electrical components, the receptacle can, optionally, provide a mounting point for a heat sink 348 as shown in Figure 12b. The heat sink 348 help to keep the one or more electrical components mounting to the receptacle cool by absorbing and dissipating heat away from the one or more electrical components.

The receptacle 138 is not limited to the mounting of one or more electrical components but can be used to provide insulation to the power source. In the case where the power source is a battery, the operational temperature of the battery has an influence on the life of the battery. One of the contributing factors for batteries to heat up while charging or discharging is its internal resistance. A higher internal resistance of the battery causes the battery to heat up when charging or discharging and the heat can cause damage leading to safety issues. A low internal resistance allows a battery to deliver high current on demand whereas a high internal resistance causes current to be restricted and the voltage across the load to drop. The internal resistance of the battery is very much dependent on the temperature and increases as the ambient temperature decreases. This is because cold temperature cause the electrochemical reactions that take place within the battery to slow down and therefore, cause a reduction in the mobility of ions in the electrolyte. As the load handling device can be operable in the chilled or frozen zones of a fulfilment centre, heating of the batteries during charging or discharging of the battery is becoming an increasing problem when operational on the grid structure causing shortening of the effective cycling service life of the battery. To mitigate the shortening of the useful life of the battery when the load handling device is operating at low temperatures, e.g. in the chilled or frozen zones, optionally the receptacle 138 can be cladded with insulation panels to reduce the loss of heat and help to maintain or regulate the temperature within the space occupied by the battery. For example, one or more insulating panels can be mounted to the exterior surface of the receptacle 138 to provide insulation to the power source contained within the receptacle 138. Examples of insulation material include but is not limited to foam material, fibreglass material comprising silica, polyurethane etc.

To secure the power source 138b to the receptacle 138, 338 once the power source is housed within the receptacle, optionally, the receptacle 138, 338 comprises a locking mechanism 350 comprising a locking member 354 movable between a locked position for blocking removal of the power source from the receptacle and an unlocked position for enabling removal of the power source from the receptacle (see Figure 12c). In the particular embodiment of the present invention shown in Figures 12b and 12c, the locking mechanism comprises one or more catches or retention members 352 formed at the rim of the upwardly standing sidewalls and/or end walls of the receptacle 338 that cooperates with the locking member 354 rotatably mounted to the power source. The one or more catches or retention members 352 can be integrated into the receptacle or separately mounted to the receptacle. Rotation of the locking member 354 in one direction locks the power source to the receptacle and rotation of the locking member in the opposite direction unlocks the power source from the receptacle. The catch or retention 352 is shown in Figure 12b is formed at the rim at the open top end 314 of the receptacle.

Whilst the particular embodiment of the present invention show the receptacle 138 as having an open frame structure, the receptacle is not limited to having an open frame structure and can be in the form of a container having solid sidewalls and a base.

Manufacture of the frame of the load handling device involves inserting the ends of the connecting rods into the openings or sockets of the connecting blocks so as to link the connecting blocks together. To help with reducing the weight of the load handling device according to the present invention, the connecting rods are typically hollow, e.g. hollow pipes. A jig can be used to assemble the individual rectangular frames together whilst the connection between the connecting blocks and/or corner brackets and the connecting elements are secured by a suitable joint. A similar manufacturing process can be used to manufacture the receptacle 138 as clearly depicted in Figure 8(a and b).

In a particular embodiment of the present invention, the receptacle is mounted to the frame 131 of the load handling device once the frame has been constructed. The process of mounting the receptacle to the frame involves lowering the receptacle into the frame such that the receptacle extends vertically through at least one of the modular sub-frames. The receptacle 138, 338 is shown in Figure 12d extending vertically through the third or uppermost modular sub-frame 134a of the frame. Also shown in Figure 12d is the receptacle 123 being secured to the modular sub-frame by the one or more struts 228. An area is provided in the frame, particularly between the first and second lifting shafts 183a 183b to accommodate the receptacle between the first and second lifting shafts (see Figure 9a). To support the receptacle within the frame, the receptacle rests or is seated on the cross-brace 206 extending across the modular sub-frame of the second modular section (also known as the mid halo) 133a,b,c. In some embodiments, the base of the receptacle is attached to the cross brace 206 of the second modular section 133a,b,c. The receptacle 138 can be further supported to the frame by fixing one or more struts extending between the receptacle and the frame, in particular to the modular sub-frame of the second modular section 133a,b,c. The receptacle provides an unobstructed area within the frame to lower a power source into the load handling device (i.e. a battery chute) so as to engage with the charge receiving elements and thereby, provide power to the electrical components of the load handling device. One or more of the electrical components such as the controller and/or communication module and/or J-switch can subsequently be mounted to the receptacle so as to draw power from the power source housed within the receptacle. One or cables are routed from the one or more electrical components 144a, 144b, 144c mounted to the receptacle to the various components to operate the load handling device on the grid structure, e.g. drive motors. Mounting of the one or more of the electrical components to the receptacle is shown in Figure 12. Alternatively, the one or more electrical components can be mounted to the receptacle 138 prior to mounting the receptacle to the frame.

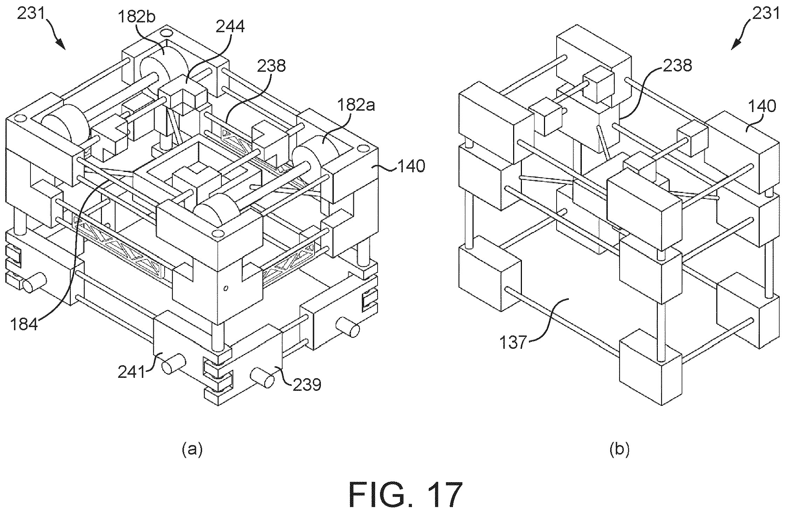

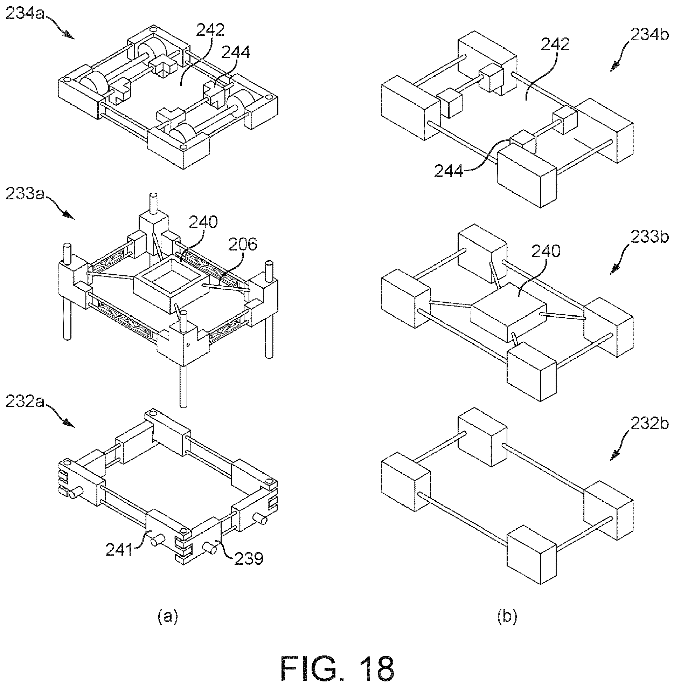

Instead of having a separate receptacle that is separately mounted to the frame 131 of the load handling device, in an alternative robotic load handling device, the receptacle 238 for receiving the power source can optionally be integrated into the frame 231 of the robotic load handling device to define a power source compartment 238 as shown in Figure 17(a and b). Figure 17a is a schematic drawing of an assembly of the modular sections according to the alternative robotic load handling device and Figure 17b is a simplified version of the assembly of the rectangular frame of the modular sections depicting the connecting blocks 140. In the particular embodiment shown in Figure 17(a and b), the externally accessible open top end 242 for receiving the power source in a substantially vertical direction is formed or integrated into one of the plurality modular sub-frames of the frame structure 231. In comparison to the receptacle 138 shown in Figures 9(a and b) where the receptacle extends above the height of the frame 131, in the alternative robotic load handling device, the receptacle forming the power source compartment 238 can extend partially above the height of the frame 231 or at least flush with the height of the frame or is below the height of the frame 231. The assembly of the different modular sections to form the frame structure 231 of the alternative robotic load handling device is very similar to the assembly of the modular sections described above with reference to Figures 8(a and b) and Figure 9(a and b) in that different modular sub-frames 232a,b; 233a,b; 234a,b are arranged in a vertical stack. In comparison to the assembly of the modular sub-frames shown in Figure 8(a and b) where the receptacle is separately mounted to the frame structure, the receptacle 238 in the alternative robotic load handling device is integrated into the frame structure 231 to define a power source compartment 238 as shown in Figures 18(a and b). The advantage of integrating the receptacle into the frame structure 231 of the robotic handling device as opposed to separately mounting the receptacle to the frame structure once the frame structure has been assembled is that it removes the need to form a separate receptacle having a plurality of substantially vertical connecting elements linking upper and lower sections of the receptacle, i.e. linking the open top end and the base of the receptacle.

To accommodate the open top end 242 of the power source compartment such that the power source can be received within the frame structure 231 of the robotic load handling device, the open top end 242 is formed within at least one of the plurality of modular sub-frames 234a,b to which the lifting drive mechanism is mounted. As discussed above, the lifting drive mechanism is configured to drive the first and second lifting shafts 183a, 183b. The first and second lifting shafts 183a, 183b are mounted for rotation to respective connecting blocks of the modular sub-frame 234a,b to which the lifting drive mechanism is mounted, i.e. the third modular section. As the first 183a and second 183b lifting shafts are spaced apart for respectively mounting the first 182a and second 182b sets of spools, the spacing between the first 183a and second 183b lifting shafts defines an externally accessible open top end 242 for lowering the power source into the frame structure 231 through this space as shown in Figure 18(a and b). In the particular embodiment shown in Figure 18a, four corner pieces 244 are mounted to the modular sub-frame to which the first 183a and second 183b lifting shafts are mounted to define the externally accessible open top end 242 of the power source compartment. The four corner pieces are arranged to provide a substantially rectangular open top end of the power source compartment but other shaped open top ends are applicable in the present invention such as a circular shape for receiving a cylindrically shaped power source and is largely depends on the shape of the power source that is received within the power source compartment. Each of the four corner pieces 244 comprises guides surfaces for guiding the power source into the power source compartment (see Figure 18a). For a cuboidal shaped power source, each of the four corner pieces 244 comprises two perpendicular guiding surfaces for accommodating a corner of the power source.

The base 240 of the power source compartment 238 for supporting the power source, on the other hand, can be formed within or integrated within a modular sub-frame 233a,b below the modular sub-frame 234a,b accommodating the open top end 242, i.e. the second or middle modular section 233a,b, (see Figure 18a,b). As discussed above, the base 240 of the power source compartment 238 can be supported by the cross brace 206 of the middle modular sub-frame 233a,b supporting at least a portion of the wheel positioning mechanism, e.g. cam mechanism, i.e. the modular sub-frame 234a, which the lifting drive mechanism is mounted and the modular sub-frame 233a,b below this modular sub-frame cooperate to form the power source compartment 238. The vertical separation between the top, third modular sub-frame 234a,b and the second, middle modular sub-frame 233a,b is such as to accommodate the height of the power source when it is received within the power source compartment. In the particular example shown in Figure 18(a and b), the bracing members of the cross brace 206 extends through the base 240 of the power source compartment 238. Alternatively, if the height of the connecting blocks 140 of the top, third modular sub-frame 234a,b is sufficiently high to accommodate the height of a power source, the base 240 can be supported by the same modular sub-frame 234a,b accommodating the open top end of the power source compartment, i.e. to which the lifting drive mechanism is mounted.

Assembly of the frame of the robotic load handling device according to the alternative design shown in Figures 17(a and b) and Figure 18(a and b) is similar to the assembly of the frame described above with reference to Figure 8(a and b) and Figures 9(a and b). Here, each of the modular sub-frames 232a,b; 233a,b; 234a,b are assembled together by connecting at least four connecting blocks by horizontal connecting elements to form a substantially rectangular frame and the modular sub-frames are arranged in a vertical stack by connecting vertically adjacent modular sub-frames by vertical connecting elements. Whereas the receptacle 138 in the earlier example shown in Figures 8(a and b) is separately formed by horizontal and vertical connecting elements, the receptacle 238 in the alternative robotic load handling device shown in Figures 17(a and b) is integrated into one or more of the modular sub-frames of the frame structure removing the need to have vertical connecting elements forming the receptacle. The vertical connecting elements of the receptacle is provided by the vertical connecting elements linking vertically adjacent modular sub-frames 232a,b; 233a,b; 234a,b together. Other advantages of integrating the receptacle into the frame or frame structure of the robotic load handling device is removing the need to brace the receptacle to the frame by one or more struts 228 since the receptacle is "buried" within the frame and therefore, enclosed within the frame 231. It also provides a more compact robotic load handling device. As with the first example of the robotic load handling device, the frame 231 forms a three dimensional structure defining a volume having an upper portion comprising the power source compartment 238 and a lower portion comprising the container receiving space 137.

During operation of the load handling device on the grid structure, stresses encountered by the open frame structure are concentrated around the joint between the connecting blocks and the connecting rods. If the connecting rods are not properly secured to the connecting blocks, there is the risk that one or more of the connecting rods would detach from its corresponding connecting block leading to the eventual break-up of the rectangular frame to which the connecting block is associated with and in a worst case scenario, the breakup of the open frame structure. To ensure the structural integrity of the resultant open frame structure, the joint for securing the ends of the connecting rods to the connecting blocks should be sufficiently strong to prevent the ends of the connecting rods from detaching from the connecting blocks, more specifically the sockets 187 in the connecting blocks. Various joints can be used to secure the ends to the connecting rods to the connecting blocks and largely depends on the material used in the fabrication of the connecting blocks and connecting rods. The various joints can include but are not limited to gluing or welding or a combination of any one of the securing methods.

During operation of the load handling device on the grid structure, the energy in the power source will deplete until the near-depleted power source needs to be exchanged for a replacement power source to allow the load handling device to continue operation on the grid structure.

The power source may be exchanged manually, but a power source exchanging apparatus is preferably provided for convenience and efficiency, and to allow the power source to be exchanged while the load handling device remains on the grid structure. The power source exchanging apparatus may be any form of suitable "pick and place" robot that can pick an object up and place it down in a desired location and in a desired manner. Exchanging the power source involves replacing the power source in a substantially vertical direction from the receptacle as shown in Figure 7b. A first or expended power source is removed from the receptacle 138 by vertically lifting the power source from the receptacle. A second or charged power source is subsequently lowered into the receptacle in a vertical direction so as to engage with the charge receiving elements of the receptacle. Because vertical removal and insertion of the power source do not require any horizontal movement of the load handling device, the load handling device can remain on the designated grid cell during the power source exchange, which includes the period for removing the depleted power source, the period for inserting the replacement power source, and the period in between.

## Claims

1. A robotic load handling device (130) for lifting and moving one or more containers (10) stackable in a storage and retrieval system (1), the storage and retrieval system comprising a grid structure (15) comprising a plurality of grid members (18, 20) comprising a first set of grid members (18) and a second set of grid members (20), the second set of grid members being substantially perpendicular to the first set of grid members such that the plurality of grid members are arranged in a grid pattern for guiding the movement of the load handling device on the grid structure, the load handling device comprising a frame (131) supporting:
a) a container lifting mechanism comprising a container-gripping assembly (172) configured to releasably grip a container, and a lifting drive mechanism configured to raise and lower the container-gripping assembly;
b) a wheel assembly comprising a first set of wheels (135) for engaging with the first set of grid members to guide movement of the load handling device in a first direction and a second set of wheels (136) for engaging with the second set of grid members to guide the movement of the load handling device in a second direction, wherein the second direction is transverse to the first direction;
c) a wheel positioning mechanism (152) configured for selectively lowering or raising the first set of wheels or the second set of wheels into engagement or disengagement with the first set of grid members or the second set of grid members;
d) a receptacle (138) for accommodating a power source (138b), the receptacle having an externally accessible open top end for receiving the power source in a substantially vertical direction and comprising charging receiving elements for electrically coupling with charge providing elements of the power source to provide power to the wheel positioning mechanism and the container lifting mechanism,
**characterised in that** the frame comprises a plurality of modular sub-frames arranged in a vertical stack, and wherein the receptacle extends vertically through at least one of the plurality of modular sub-frames.

2. The robotic load handling device (130) of claim 1, wherein the frame (131) further supports an electrical component comprising a controller (144a) for controlling the container lifting mechanism and the wheel positioning mechanism (152).

3. The robotic load handling device (130) of claim 2, wherein the electrical component further comprises a communication module (144b) for receiving instructions from an external central control system, and wherein the controller controls the movement of the load handling device on the grid structure in response to the instructions from the communication module.

4. The robotic load handling device (130) of claim 2 or claim 3, further comprising a cable tray (224) mounted to the receptacle (138) for routing one or more electrical cables from the electrical component to the container lifting mechanism and the wheel positioning mechanism (138).

5. The robotic load handling device (130) of any of the preceding claims, wherein each modular sub-frame (186) of the plurality of modular sub-frames comprises at least four connecting blocks (140), each of the at least four connecting blocks is connected to two other connecting blocks in a single modular sub-frame by one or more horizontal connecting elements (184) to form a rectangular frame structure and wherein the at least four connecting blocks of vertically adjacent modular sections are connectable in the vertical stack by one or more substantially vertical connecting elements (188) to form the frame (131) comprising a plurality of the rectangular frames.

6. The robotic load handling device (130) of claim 5, wherein the frame(131) is an open frame structure.

7. The robotic load handling device (130) of any of the preceding claims, wherein the receptacle (138) extends vertically above the height of the frame (131).

8. The robotic load handling device (130) of any of the preceding claims, wherein the charge receiving elements is configured to electrically couple with the power source (138b) when the power source is vertically received within the receptacle (138) and electrically uncouple from the charge receiving elements when the power source is vertically raised from the receptacle.

9. The robotic load handling device (130) of any of the preceding claims, wherein the receptacle (138) is removably attached to OR integrated to at least one of the plurality of modular sub-frames.

10. The robotic load handling device (130) of any of the preceding claims, wherein the container lifting mechanism comprises:
i) a first set of spools (182a) and a second set of spools (182b), each of the first and second set of spools carrying a lifting tether (38) having a first end anchored to the container-gripping assembly (172) and a second end anchored to its respective spool,
ii) a first lifting shaft (183a) and a second lifting shaft (183b), the first set of spools being mounted for rotation on the first lifting shaft and the second set of spools being mounted for rotation on the second lifting shaft, the first and second lifting shafts being connected to the lifting drive mechanism to transfer rotation from an output of the lifting drive mechanism to raise and lower the container-gripping assembly;
wherein the first and second lifting shafts are spaced apart such that the receptacle (138) is disposed between the first and second lifting shafts.

11. The robotic load handling device (130) of claim 10, wherein the lifting drive mechanism comprises a drive pulley and a plurality of timing pulleys connected for rotation with the first and second set of spools by an endless belt.

12. The robotic load handling device (130) of any of the preceding claims, wherein the frame (131) defines a volume having an upper portion and a lower portion, the upper portion comprising the receptacle (138) and the lower portion comprising a container receiving space (137).

13. A method of construction of a robotic load handling device (130) according to any of claims 5-12,
wherein the method comprising the steps of:
i) forming a plurality of the modular sub-frames (186), each of the plurality of modular frames being formed by linking together the at least four connecting blocks (140) by the one or more horizontal connecting elements (184);
ii) linking the plurality of the modular sub-frames together in a vertical stack by connecting the connecting blocks of vertically adjacent modular sub-frames by the one or more vertical connecting elements (188) to form the frame,
iii) mounting the receptacle (138) for accommodating the power source to the frame such that the receptacle extends vertically through at least one of the plurality of modular sub-frames, said receptacle comprising charge receiving elements for electrically coupling with charge providing elements of the power source and an externally accessible open top end (214) for receiving the power source in a substantially vertical direction.

14. A method of exchanging the power source (138b) in the receptacle (138) of the robotic load handling device (130) of any of claims 1 to 12, the method comprising the steps of:
(i) vertically removing a first power source from the receptacle; and
(ii) vertically inserting a second power source into the receptacle.

15. An automated storage and retrieval system (1), the system comprising:
a grid structure (15) comprising a plurality of grid members (18, 20) comprising a first set of grid members (18) and a second set of grid members (20), the second set of grid members being substantially perpendicular to the first set of grid members such that the plurality of grid members are arranged in a grid pattern for guiding the movement of one or more the load handling devices (130) operating on the grid structure; and
at least one robotic load handling device according to any of claims 1 to 12.

## Patentansprüche

1. Robotergestütztes Lasthandhabungsgerät (130) zum Heben und Bewegen eines oder mehrerer in einem Lager- und Entnahmesystem (1) stapelbarerer Behälter (10), wobei das Lager- und Entnahmesystem eine Gitterstruktur (15) umfasst, die eine Vielzahl von Gittergliedern (18, 20) umfasst, die einen ersten Satz von Gittergliedern (18) und einen zweiten Satz von Gittergliedern (20) umfasst, wobei der zweite Satz von Gittergliedern im Wesentlichen rechtwinklig zu dem ersten Satz von Gittergliedern ist, sodass die Vielzahl von Gittergliedern in einem Gittermuster zum Führen der Bewegung des Lasthandhabungsgeräts auf der Gitterstruktur angeordnet ist, wobei das Lasthandhabungsgerät einen Rahmen (131) umfasst, der Folgendes stützt:
a) einen Behälterhebemechanismus, umfassend eine Behältergreifanordnung (172), die konfiguriert ist, um einen Behälter freigebbar zu greifen, und einen Hebeantriebsmechanismus, konfiguriert, um die Behältergreifanordnung anzuheben und abzusenken;
b) eine Radanordnung, umfassend einen ersten Satz von Rädern (135) zum Einrasten mit dem ersten Satz von Gittergliedern, um Bewegung des Lasthandhabungsgeräts in eine erste Richtung zu führen, und einen zweiten Satz von Rädern (136) zum Einrasten mit dem zweiten Satz von Gittergliedern, um die Bewegung des Lasthandhabungsgeräts in eine zweite Richtung zu führen, wobei die zweite Richtung quer zu der ersten Richtung ist;
c) einen Radpositionierungsmechanismus (152), konfiguriert zum selektiven Absenken oder Heben des ersten Satzes von Rädern oder des zweiten Satzes von Rädern zum Einrasten oder Ausrasten mit dem ersten Satz von Gittergliedern oder dem zweiten Satz von Gittergliedern;
d) eine Aufnahme (138) zur Unterbringung einer Leistungsquelle (138b), wobei die Aufnahme ein extern zugreifbares offenes oberes Ende zum Aufnehmen der Leistungsquelle in einer im Wesentlichen senkrechten Richtung aufweist und umfassend Ladungsaufnahmeelemente zum elektrischen Koppeln mit Ladungsbereitstellungselementen der Leistungsquelle, um Leistung an den Radpositionierungsmechanismus und den Behälterhebemechanismus bereitzustellen,
**dadurch gekennzeichnet, dass** der Rahmen eine Vielzahl von in einem senkrechten Stapel angeordneter modularer Hilfsrahmen umfasst, und wobei sich die Aufnahme senkrecht durch mindestens einen der Vielzahl von modularen Hilfsrahmen erstreckt.

2. Robotergestütztes Lasthandhabungsgerät (130) nach Anspruch 1, wobei der Rahmen (131) ferner eine elektrische Komponente unterstützt, umfassend einen Controller (144a) zum Steuern des Behälterhebemechanismus und des Radpositionierungsmechanismus (152).

3. Robotergestütztes Lasthandhabungsgerät (130) nach Anspruch 2, wobei die elektrische Komponente ferner ein Kommunikationsmodul (144b) zum Empfangen von Anweisungen von einem externen zentralen Steuerungssystem umfasst, und wobei der Controller die Bewegung des Lasthandhabungsgeräts auf der Gitterstruktur als Reaktion auf die Anweisungen von dem Kommunikationsmodul steuert.

4. Robotergestütztes Lasthandhabungsgerät (130) nach Anspruch 2 oder Anspruch 3, ferner umfassend einen an der Aufnahme (138) angebrachten Kabelträger (224) zum Leiten eines oder mehrerer elektrischer Kabel von der elektrischen Komponente zu dem Behälterhebemechanismus und dem Radpositionierungsmechanismus (138).

5. Robotergestütztes Lasthandhabungsgerät (130) nach einem der vorhergehenden Ansprüche, wobei jeder modulare Hilfsrahmen (186) der Vielzahl von modularen Hilfsrahmen mindestens vier Verbindungsblöcke (140) umfasst, wobei jeder der mindestens vier Verbindungsblöcke mit zwei anderen Verbindungsblöcken in einem einzelnen modularen Hilfsrahmen durch ein oder mehrere waagerechte Verbindungselemente (184) verbunden ist, um eine rechteckige Rahmenstruktur zu bilden, und wobei die mindestens vier Verbindungsblöcke der senkrecht benachbarten modularen Abschnitte in dem senkrechten Stapel durch ein oder mehrere im Wesentlichen senkrechte Verbindungselemente (188) verbindbar sind, um den Rahmen (131) umfassend eine Vielzahl der rechteckigen Rahmen zu bilden.

6. Robotergestütztes Lasthandhabungsgerät (130) nach Anspruch 5, wobei der Rahmen (131) eine offene Rahmenstruktur ist.

7. Robotergestütztes Lasthandhabungsgerät (130) nach einem der vorhergehenden Ansprüche, wobei sich die Aufnahme (138) senkrecht über die Höhe des Rahmens (131) erstreckt.

8. Robotergestütztes Lasthandhabungsgerät (130) nach einem der vorhergehenden Ansprüche, wobei die Ladungsaufnahmeelemente konfiguriert sind, um mit der Leistungsquelle (138b) elektrisch zu koppeln, wenn die Leistungsquelle senkrecht innerhalb der Aufnahme (138) aufgenommen ist und elektrisch von den Ladungsaufnahmeelementen zu entkoppeln, wenn die Leistungsquelle senkrecht von der Aufnahme angehoben ist.

9. Robotergestütztes Lasthandhabungsgerät (130) nach einem der vorhergehenden Ansprüche, wobei die Aufnahme (138) an/in mindestes einen der Vielzahl von modularen Hilfsrahmen entfernbar angebracht ODER integriert ist.

10. Robotergestütztes Lasthandhabungsgerät (130) nach einem der vorhergehenden Ansprüche, wobei der Behälterhebemechanismus Folgendes umfasst:
i) einen ersten Satz von Rollen (182a) und einen zweiten Satz von Rollen (182b), wobei jeder des ersten und zweiten Satzes von Rollen eine Hebesicherung (38) trägt, aufweisend ein erstes an der Behältergreifanordnung (172) verankertes Ende und ein zweites an deren jeweiliger Rolle verankertes Ende,
ii) einen ersten Hebeschaft (183a) und einen zweiten Hebeschaft (183b), wobei der erste Satz von Rollen zur Drehung an dem ersten Hebeschaft montiert ist und der zweite Satz von Rollen zur Drehung an dem zweiten Hebeschaft montiert ist, wobei der erste und zweite Hebeschaft mit dem Hebeantriebsmechanismus verbunden sind, um Drehung von einer Ausgabe des Hebeantriebsmechanismus zu übertragen, um die Behältergreifanordnung anzuheben und abzusenken;
wobei der erste und zweite Hebeschaft derart beabstandet sind, dass die Aufnahme (138) zwischen dem ersten und zweiten Hebeschaft platziert ist.

11. Robotergestütztes Lasthandhabungsgerät (130) nach Anspruch 10, wobei der Hebeantriebsmechanismus eine Antriebsriemenscheibe und eine Vielzahl von zur Drehung mit dem ersten und zweiten Satz von Rollen durch ein Endlosband verbundenen Timing-Riemenscheiben umfasst.

12. Robotergestütztes Lasthandhabungsgerät (130) nach einem der vorhergehenden Ansprüche, wobei der Rahmen (131) ein Volumen aufweisend einen oberen Teil und einen unteren Teil definiert, wobei der obere Teil die Aufnahme (138) umfasst und der untere Teil einen Behälteraufnahmeraum (137) umfasst.

13. Verfahren zur Konstruktion eines robotergestützten Lasthandhabungsgeräts (130) nach einem der Ansprüche 5-12, wobei das Verfahren die folgenden Schritte umfasst:
i) Bilden einer Vielzahl der modularen Hilfsrahmen (186), wobei jeder der Vielzahl von modularen Rahmen durch Zusammenführen der mindestens vier Verbindungsblöcke (140) durch das eine oder die mehreren waagerechten Verbindungselemente (184) gebildet wird;
ii) Zusammenführen der Vielzahl der modularen Hilfsrahmen in einem senkrechten Stapel durch Verbinden der Verbindungsblöcke von senkrecht benachbarten modularen Hilfsrahmen durch das eine oder die mehreren senkrechten Verbindungselemente (188), um den Rahmen zu bilden,
iii) Anbringen der Aufnahme (138) zur Unterbringung der Leistungsquelle in den Rahmen, sodass sich die Aufnahme senkrecht durch den mindestens einen der Vielzahl von modularen Hilfsrahmen erstreckt, wobei die Aufnahme Ladungsaufnahmeelemente zum elektrischen Koppeln mit Ladungsbereitstellungselementen der Leistungsquelle und ein extern zugreifbares offenes oberes Ende (214) zum Aufnehmen der Leistungsquelle in einer im Wesentlichen senkrechten Richtung umfasst.

14. Verfahren zum Auswechseln der Leistungsquelle (138b) in der Aufnahme (138) des robotergestützten Lasthandhabungsgeräts (130) nach einem der Ansprüche 1 bis 12, wobei das Verfahren die folgenden Schritte umfasst:
(i) senkrechtes Entfernen einer ersten Leistungsquelle von der Aufnahme; und
(ii) senkrechtes Einfügen einer zweiten Leistungsquelle in die Aufnahme.

15. Automatisiertes Lager- und Entnahmesystem (1), wobei das System Folgendes umfasst:
eine Gitterstruktur (15), umfassend eine Vielzahl von Gittergliedern (18, 20), umfassend einen ersten Satz von Gittergliedern (18) und einen zweiten Satz von Gittergliedern (20), wobei der zweite Satz von Gittergliedern im Wesentlichen rechtwinklig zu dem ersten Satz von Gittergliedern ist, derart, dass die Vielzahl von Gittergliedern zum Führen der Bewegung von einem oder mehreren an der Gitterstruktur betriebenen Lasthandhabungsgeräten (130) in einem Gittermuster angeordnet ist; und
mindestens ein robotergestütztes Lasthandhabungsgerät nach einem der Ansprüche 1 bis 12.

## Revendications

1. Dispositif robotisé de manutention de charges (130) destiné au levage et au déplacement d'un ou plusieurs conteneurs (10) empilables dans un système de stockage et de récupération (1), le système de stockage et de récupération comprenant une structure en grille (15) comprenant une pluralité d'éléments de grille (18, 20), comprenant un premier ensemble d'éléments de grille (18) et un second ensemble d'éléments de grille (20), le second ensemble d'éléments de grille étant sensiblement perpendiculaire au premier ensemble d'éléments de grille, de sorte que la pluralité d'éléments de grille soit disposée en grille pour guider le déplacement du dispositif de manutention de charges sur la structure en grille, le dispositif de manutention de charges comprenant un cadre (131) supportant :
a) un mécanisme de levage de conteneur comprenant un ensemble de préhension de conteneurs (172) configuré pour saisir de manière amovible un conteneur, et un mécanisme d'entraînement de levage configuré pour lever et abaisser l'ensemble de préhension de conteneurs ;
b) un ensemble de roues comprenant un premier ensemble de roues (135) destiné à entrer en contact avec le premier ensemble d'éléments de grille pour guider le déplacement du dispositif de manutention de charges dans une première direction et un second ensemble de roues (136) destiné à entrer en contact avec le second ensemble d'éléments de grille pour guider le déplacement du dispositif de manutention de charges dans une seconde direction, dans lequel la seconde direction est transversale à la première direction ;
c) un mécanisme de positionnement de roues (152) configuré pour abaisser ou relever sélectivement le premier ensemble de roues ou le second ensemble de roues pour entrer en contact avec le premier ensemble d'éléments de grille ou le second ensemble d'éléments de grille ou s'en désengager ;
d) un réceptacle (138) destiné à accueillir une source d'alimentation (138b), le réceptacle ayant une extrémité supérieure ouverte accessible de l'extérieur pour recevoir la source d'alimentation dans une direction sensiblement verticale et comprenant des éléments de réception de charges pour se coupler électriquement avec les éléments de fourniture de charges de la source d'alimentation afin de fournir de l'énergie au mécanisme de positionnement de roues et au mécanisme de levage de conteneurs,
**caractérisé en ce que** le cadre comprend une pluralité de sous-cadres modulaires disposés en une pile verticale, et dans lequel le réceptacle s'étend verticalement à travers au moins un de la pluralité de sous-cadres modulaires.

2. Dispositif robotisé de manutention de charges (130) selon la revendication 1, dans lequel le cadre (131) supporte en outre un composant électrique comprenant un contrôleur (144a) pour commander le mécanisme de levage de conteneurs et le mécanisme de positionnement de roues (152).

3. Dispositif robotisé de manutention de charges (130) selon la revendication 2, dans lequel le composant électrique comprend en outre un module de communication (144b) destiné à recevoir des instructions d'un système de commande central externe, et dans lequel le contrôleur commande le déplacement du dispositif de manutention de charges sur la structure de grille en réponse aux instructions du module de communication.

4. Dispositif robotisé de manutention de charges (130) selon la revendication 2 ou la revendication 3, comprenant en outre un chemin de câbles (224) monté sur le réceptacle (138) pour acheminer un ou plusieurs câbles électriques du composant électrique au mécanisme de levage de conteneurs et au mécanisme de positionnement de roues (138).

5. Dispositif robotisé de manutention de charges (130) selon l'une quelconque des revendications précédentes, dans lequel chaque sous-cadre modulaire (186) de la pluralité de sous-cadres modulaires comprend au moins quatre blocs de connexion (140), chacun des au moins quatre blocs de connexion est connecté à deux autres blocs de connexion dans un seul sous-cadre modulaire par un ou plusieurs éléments de connexion horizontaux (184) pour former une structure de cadre rectangulaire et dans lequel les au moins quatre blocs de connexion de sections modulaires verticalement adjacentes sont connectables dans la pile verticale par un ou plusieurs éléments de connexion sensiblement verticaux (188) pour former le cadre (131) comprenant une pluralité de cadres rectangulaires.

6. Dispositif robotisé de manutention de charges (130) selon la revendication 5, dans lequel le cadre (131) est une structure de cadre ouverte.

7. Dispositif robotisé de manutention de charges (130) selon l'une quelconque des revendications précédentes, dans lequel le réceptacle (138) s'étend verticalement au-dessus de la hauteur du cadre (131).

8. Dispositif robotisé de manutention de charges (130) selon l'une quelconque des revendications précédentes, dans lequel les éléments de réception de charges sont configurés pour se coupler électriquement avec la source d'alimentation (138b) lorsque la source d'alimentation est reçue verticalement dans le réceptacle (138) et se découpler électriquement des éléments de réception de charges lorsque la source d'alimentation est retirée verticalement du réceptacle.

9. Dispositif robotisé de manutention de charges (130) selon l'une quelconque des revendications précédentes, dans lequel le réceptacle (138) est fixé de manière amovible à OU intégré à au moins l'un de la pluralité de sous-cadres modulaires.

10. Dispositif robotisé de manutention de charges (130) selon l'une quelconque des revendications précédentes, dans lequel le mécanisme de levage de conteneurs comprend :
i) un premier ensemble de bobines (182a) et un second ensemble de bobines (182b), chacun du premier et du second ensembles de bobines portant un câble de levage (38) ayant une première extrémité ancrée à l'ensemble de préhension de conteneurs (172) et une seconde extrémité ancrée à sa bobine respective,
ii) un premier arbre de levage (183a) et un second arbre de levage (183b), le premier ensemble de bobines étant monté pour tourner sur le premier arbre de levage et le second ensemble de bobines étant monté pour tourner sur le second arbre de levage, les premier et second arbres de levage étant reliés au mécanisme d'entraînement de levage pour transférer la rotation d'une sortie du mécanisme d'entraînement de levage afin de lever et d'abaisser l'ensemble de préhension de conteneurs ;
dans lequel les premier et second arbres de levage sont espacés de telle sorte que le réceptacle (138) soit disposé entre le premier et le second arbres de levage.

11. Dispositif robotisé de manutention de charges (130) selon la revendication 10, dans lequel le mécanisme d'entraînement de levage comprend une poulie d'entraînement et une pluralité de poulies de synchronisation reliées pour la rotation avec le premier et le second ensembles de bobines par une courroie sans fin.

12. Dispositif robotisé de manutention de charges (130) selon l'une quelconque des revendications précédentes, dans lequel le cadre (131) définit un volume ayant une partie supérieure et une partie inférieure, la partie supérieure comprenant le réceptacle (138) et la partie inférieure comprenant un espace de réception de conteneurs (137).

13. Procédé de construction d'un dispositif robotisé de manutention de charges (130) selon l'une quelconque des revendications 5 à 12,
dans lequel le procédé comprend les étapes suivantes :
i) formation d'une pluralité de sous-cadres modulaires (186), chacun de la pluralité de cadres modulaires étant formé en reliant ensemble les au moins quatre blocs de connexion (140) par un ou plusieurs éléments de connexion horizontaux (184) ;
ii) liaison de la pluralité des sous-cadres modulaires dans une pile verticale en reliant les blocs de connexion de sous-cadres modulaires verticalement adjacents par l'un ou plusieurs éléments de connexion verticaux (188) pour former le cadre, iii) montage du réceptacle (138) destiné à accueillir la source d'alimentation sur le cadre, de telle sorte que le réceptacle s'étende verticalement à travers au moins un de la pluralité de sous-cadres modulaires, ledit réceptacle comprenant des éléments de réception de charges destinés à se coupler électriquement avec les éléments de fourniture de charges de la source d'alimentation et une extrémité supérieure ouverte accessible de l'extérieur (214) destinée à recevoir la source d'alimentation dans une direction sensiblement verticale.

14. Procédé de remplacement de la source d'alimentation (138b) dans le réceptacle (138) du dispositif robotisé de manutention de charges (130) selon l'une quelconque des revendications 1 à 12, le procédé comprenant les étapes suivantes :
(i) le retrait vertical d'une première source d'alimentation du réceptacle ; et
(ii) l'insertion verticale d'une seconde source d'alimentation dans le réceptacle.

15. Système automatisé de stockage et de récupération (1), le système comprenant :
une structure de grille (15) comprenant une pluralité d'éléments de grille (18, 20) comprenant un premier ensemble d'éléments de grille (18) et un second ensemble d'éléments de grille (20), le second ensemble d'éléments de grille étant sensiblement perpendiculaire au premier ensemble d'éléments de grille, de sorte que la pluralité d'éléments de grille soit disposée selon un motif de grille pour guider le déplacement d'un ou de plusieurs dispositifs de manutention de charges (130) fonctionnant sur la structure de grille ; et
au moins un dispositif robotisé de manutention de charges selon l'une quelconque des revendications 1 à 12.
